# EUROPÄISCHE PATENTSCHRIFT

(11) **EP 2 301 816 B1**
(45) Veröffentlichungstag und Bekanntmachung des Hinweises auf die Patenterteilung: **27.08.2014**
(21) Anmeldenummer: 10180573.7
(22) Anmeldetag: 28.09.2010
(51) Int. Cl.: B60T 7/10, B60T 11/04, F16C 1/12, F16C 1/22, B60T 11/06, F16C 1/18

(54) **Seilzugeinstellung**
Cable adjustment
Adjustage de câble de commande

(30) Priorität: 28.09.2009 DE 202009011074 U; 18.01.2010 DE 202010000054 U; 02.06.2010 DE 202010005549 U
(43) Veröffentlichungstag der Anmeldung: 30.03.2011
(73) Patentinhaber: AL-KO Kober AG, 89359 Kötz (DE)
(72) Erfinder: Hollaus, Georg, 6290 Mayrhofen (AT); Kainzer, Christoph, 6284 Ramsau i. Zillertal (AT); Sailer, Wolfgang, 6290 Mayrhofen (AT)
(74) Vertreter: Ernicke, Hans-Dieter

(56) Entgegenhaltungen:
- DE-A1- 19 718 320
- DE-U1- 29 721 843
- DE-U1-202008 000 220
- FR-A1- 2 885 107
- GB-A- 2 087 491

## Beschreibung

Die Erfindung betrifft eine Seilzugeinstellung mit den Merkmalen im Oberbegriff des Hauptanspruchs.

Eine solche Seilzugeinstellung für einen oder mehrere Seilzüge einer Feststellbremse von Fahrzeugen ist aus der DE 20 2006 018 319 U1 bekannt. Sie kompensiert den Verschleiß automatisch und weist zwei relativ zueinander bewegbare und aneinander geführte Einstellelemente in Form einer Zahnstange und eines Klemmgehäuses auf, wobei die Zahnstange mit dem Seilzug und das Klemmgehäuse drehbar mit einem Handbremshebel verbunden ist. Die Einstellelemente werden von einem als Druckfeder ausgebildeten Spannelement beaufschlagt, welches permanent wirksam ist und die Länge der Seilzugeinstellung zu verkürzen trachtet. Durch diese Verkürzung wird Verschleiss in den Seilzügen und an den Radbremsen aufgenommen. Die Seilzugeinstellung besitzt eine Fixiereinrichtung in Form einer Klemmeinrichtung und ein Rastgesperre mit gezahnten Rastelementen zur lösbaren Arretierung der Relativstellung der Einstellelemente. Von den Einstellelementen weist nur die Zahnstange eine Verzahnung auf, die zur Arretierung in eine Gegenverzahnung an einem zusätzlichen Klemmbügel greift, der im glattwandigen Klemmgehäuse beweglich gelagert ist und dabei von einer Keilführung in Eingriff mit der Zahnstange gedrückt wird. In Lösestellung des Handbremshebels drückt ein stationärer Anschlag den Klemmbügel aus der Keilführung und öffnet das Rastgesperre.
Die FR2885107 zeigt ebenfalls eine solche Seilzugeinstellung.

Es ist Aufgabe der vorliegenden Erfindung, eine weiterentwickelte Seilzugeinstellung aufzuzeigen.

Die Erfindung löst diese Aufgabe mit den Merkmalen im Hauptanspruch.

Die beanspruchte Seilzugeinstellung hat den Vorteil einer besonders einfachen, kostengünstigen und funktionellen Bauweise und einer damit verbundenen maximalen Wirtschaftlichkeit. Außerdem ist die Seilzugeinstellung leicht, einfach und sicher zu bedienen. Sie lässt in Erstausrüstung einbauen, kann aber auch leicht nachgerüstet werden.

Die Seilzugeinstellung kann so ausgelegt sein, dass sie zur Verschleißkompensation bedarfsweise durch manuellen Eingriff und unter Kontrolle eines Bedieners zu betätigen ist. Die Seilzugeinstellung hat dadurch im Betrieb eine definierte, feste und belastbare Relativstellung ihrer Einstellelemente mit dem Vorteil einer besonders sicheren Kraftübertragung zwischen einem Betätigungsorgan, insbesondere einem Handbremshebel, und einem Zugelement, insbesondere einem Seilzug. Auch das Ansprechverhalten ist schnell und sicher. Der Verzicht auf eine bewegliche Klemmtechnik vereinfacht und verbilligt die Seilzugeinstellung, die zudem mit besonders wenigen und kostengünstigen Bauteilen auskommt.

Die Einstellelemente der Seilzugeinstellung können direkt aneinander geführt sein und können jeweils mit einem Spannelement, insbesondere einer Feder, im Eingriff stehen. Die Fixiereinrichtung kann die Einstellelemente mit einem die Einstellelemente durchsetzenden Spannmittel fest zusammenspannen und wird bedarfsweise zum Nachspannen des Zugelements, insbesondere Seilzugs, geöffnet. Die Kraftübertragung zwischen den Einstellelementen kann auf kurzem Wege über ein Rastgesperre erfolgen. Die Einstellelemente haben hierfür jeweils ein Rastelement, wobei diese Rastelemente in direkten Eingriff treten können. Sie können alternativ an einem Zwischenteil, z.B. einer Ringscheibe angreifen und verrasten, wobei diese Ausführung besonders günstig für eine wiederholte und stufenlose Verstellung der Seilzugeinstellung ist.

Die Seilzugeinstellung kann sowohl in der ausgefahrenen Montagestellung, als auch in verschiedenen eingefahrenen Arbeitsstellungen fixiert werden. Die Verstellung und Fixierung ist in engen Stufen oder stufenlos möglich. Hierdurch kann die Wirkung des Spannelementes blockiert und die Seilzugeinstellung versteift werden. Dies hat ein schnelles und verlustloses Ansprechen der Seilzugbetätigung, insbesondere beim Anziehen einer Feststellbremse, zur Folge. Der vorhandene Betätigungsweg kann maximal ausgeschöpft werden. Für einen schwenkbaren Handbremshebel ist dies wegen der Begrenzung des Schwenkbereichs und der Erzielung günstiger Handkräfte bei der Hebelbetätigung von Vorteil.

Ein Nachstellen und insbesondere Verkürzen der Seilzugeinstellung unter Federeinwirkung ist bei Bedarf jederzeit möglich. Das hierfür zu öffnende Spannmittel, vorzugsweise eine Klemmschraube, kann sich bei gelöstem Handbremshebel unabhängig von der aktuellen Länge der Seilzugeinstellung immer an der gleichen Stelle befinden, was die Bedienung erleichtert und die Zugangsmöglichkeiten optimiert. Besondere Vorteile bietet dabei eine Doppelfunktion eines Spannelements als Teil der Fixier- und Rasteinrichtung sowie als Lagerung bzw. Verbindung zu einem Betätigungsorgan, wobei sich außerdem eine besonders einfache Bauform mit einer minimalen Bauteilzahl ergibt.

Eine schräge Anlagefläche für das Spannelement kann die Spannwirkung optimieren. Sie kann ggf. einem unerwünschten Selbstlösen entgegen wirken. Sie ist auch für ein mehrmaliges Öffnen und Anziehen des Spannelements und die Beibehaltung der optimalen Spannwirkung von Vorteil.

Die Seilzugeinstellung weist zwei, Einstellelemente auf, die aneinander in Verstellrichtung beweglich geführt und mittels der Fixiereinrichtung in verschiedenen Relativstellungen zueinander arretierbar sind. Die Arretierung kann formschlüssig und/oder kraftschlüssig erfolgen, wobei eine formschlüssige Arretierung durch eine unmittelbare oder mittelbare Verrastung möglich ist. Letztere ist für eine stufenlose Verstellung in Verbindung mit einer formschlüssigen Fixierung von Vorteil. Die gegenseitige Verbindung und Führung der Einstellelemente kann auf einfache, kostengünstige und verliersichere Weise über eine formschlüssige Führung am Spannmittel und eine Langlochführung realisiert werden. Die Langlochführung kann ein oder mehrere, insbesondere zwei, Langlöcher oder Führungsschlitze aufweisen, die eine gerade oder gebogene Form haben können. Hierdurch ist eine definierte lineare oder rotatorische Nachstellbewegung möglich, wofür mehrere verschiedene Ausführungsbeispiele in der Beschreibung angegeben werden.

Günstig ist außerdem die kleine Bauform der Seilzugverstellung, die sich dadurch auch in beengten Platzverhältnissen unterbringen lässt. Hierbei ist es ferner möglich, mit unterschiedlichen Arten von Spannelementen und insbesondere mit zwei oder mehr Federn zu arbeiten. Hierdurch können einerseits hohe Spann- und Kompensationskräfte aufgebracht werden und andererseits der Platzbedarf optimiert werden.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1 bis 3:: Teile einer Feststellbremse und einer Seilzugverstellung in verschiedenen Ansichten,
- Figur 4 bis 9:: eine erste Ausführungsform der Seilzugverstellung in verschiedenen Ansichten,
- Figur 10:: eine Darstellung verschiedener Betriebsstellungen und Auszuglängen der Seilzugverstellung und
- Figur 11 bis 13:: eine zweite Variante der Seilzugverstellung in verschiedenen Ansichten,
- Figur 14:: eine dritte Variante der Seilzugverstellung in perspektivischer Ansicht,
- Figur 15:: eine Draufsicht auf die Seilzugverstellung von Figur 14,
- Figur 16 bis 18:: verschiedene geklappte Ansichten der Seilzugverstellung von Figur 14,
- Figur 19:: eine vergrößerte und abgebrochene Seitenansicht der Fixiereinrichtung von Figur 27 und
- Figur 20:: eine vergrößerte Detailansicht des Ausschnitts XX von Figur 19.
- Figur 21:: eine Bremseinrichtung mit einer weiteren Ausführungsform der Seilzugverstellung in perspektivischer Ansicht,
- Figur 22:: eine Seitenansicht der Seilzugverstellung von Figur 21 in Ausgangsstellung,
- Figur 23:: eine Seitenansicht der Seilzugverstellung von Figur 21 und 22 in Endstellung,
- Figur 24:: eine andere perspektivische Ansicht der Bremseinrichtung mit der Seilzugverstellung und
- Figur 25:: eine vergrößerte geschnittene Detailansicht der Seilzugverstellung gemäß Schnittlinie XXV - XXV von Figur 23,
- Figur 26 und 27:: eine Bremseinrichtung mit einer weiteren Ausführungsform der Seilzugverstellung in perspektivischen Ansichten,
- Figur 28 und 29:: die Seilzugverstellung in verschiedenen perspektivischen Ansichten,
- Figur 30 und 31:: die Seilzugverstellung in Seitenansicht und geklappter Draufsicht,
- Figur 32:: einen Längsschnitt der Seilzugverstellung gemäß Schnittlinie XXXII - XXXII von Figur 30 und
- Figur 33 bis 35:: Einzelteile der Seilzugverstellung in perspektivischen Ansichten.

Die Erfindung betrifft eine Seilzugeinstellung (1) für ein Zugelement (9), das unterschiedlichen Zwecken dienen kann und die beispielsweise für eine Bremseinrichtung (3) von Fahrzeugen vorgesehen ist. Die Erfindung betrifft ferner eine mit einer Seilzugeinstellung (1) ausgerüstete Bremseinrichtung (3).

Das Zugelement (9) kann einen oder mehrere Stränge haben, wobei letztere ggf. durch einen Waagbalken (12) oder ein anderes Ausgleichselement verbunden sind. Das Zugelement (9) kann als Seilzug oder als Bremszug ausgebildet sein, der direkt mit der Seilzugeinstellung (1) verbunden ist. Alternativ kann das Zugelement (9) ein dem Seilzug vorgeschaltetes Verbindungselement aufweisen. Der Seilzug (9) kann als Bowdenzug ausgebildet sein und einen relativ ortsfest abgestützten Mantel (nicht dargestellt) und eine Seele (11), z.B. in Form eines Seils aufweisen, die am Ende einen verdickten Kopf oder ein anderes Befestigungselement trägt. Ein Verbindungselement kann ebenfalls biegeelastisch und z.B. seilförmig sein.

Die Seilzugeinstellung (1) lässt sich ansonsten mit beliebigen anderen Zugelementen (9), z.B. Primärseilen, Stahlbändern, Kohle/Kunststofffaserbändern oder anderen flexible Verbindungselementen zur Kraftübertragung einsetzen. Alternativ ist auch ein drehend gelagertes Zugelement, z.B. eine Zugstange, möglich.

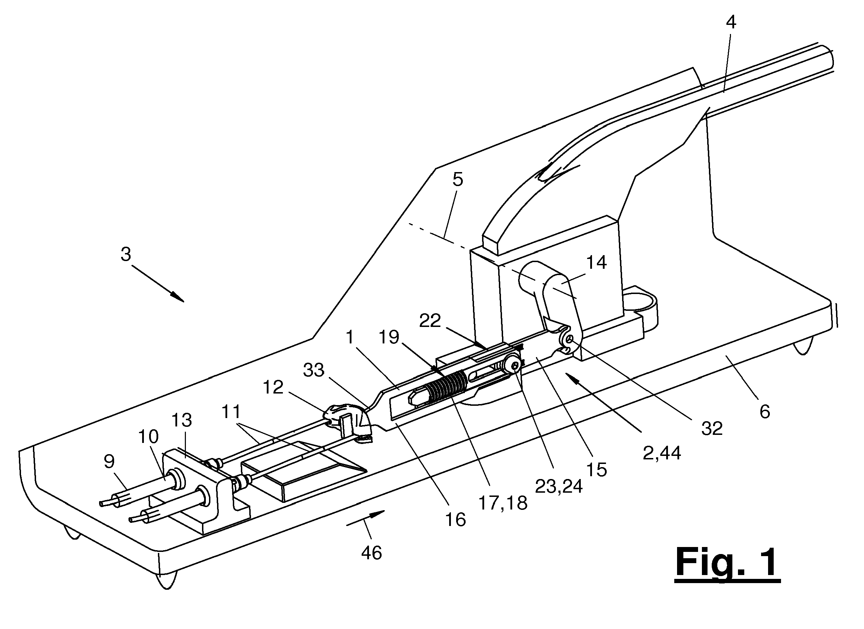

Die Bremseinrichtung (3) kann z.B. eine Feststellbremse eines Kraftfahrzeugs sein. Figur 1 bis 3, 21 bis 25 und 26, 27 zeigen eine solche Bremseinrichtung (3) in Teilen. Sie weist ein Betätigungsorgan (4) und einen oder mehrere Seilzüge (9) auf, die zu den nicht dargestellten Radbremsen führen. Die Seilzugeinstellung (1) ist in diesem Fall zwischen dem Betätigungsorgan (4) und den Seilzügen (9) angeordnet. Alternativ kann die Seilzugeinstellung (1) auch zwischen zwei Seilzügen oder an anderer Stelle angeordnet sein.

Das Betätigungsorgan (4) ist z.B. als ein Handbremshebel ausgebildet, der an einem mit dem Fahrzeug verbundenen Gestell (6) um eine vorzugsweise gestellfeste Schwenkachse (5) schwenkbar gelagert ist. Alternativ kann das Betätigungsorgan (4) auch ein Pedal oder dgl. sein. Das Betätigungsorgan (4) weist einen Korpus (52) auf, der an einem unteren verbreiterten Bereich die Schwenkachse bzw. das Schwenklager (5) aufnimmt und der am oberen verjüngten Ende einen Griff oder eine Pedaltrittfläche aufweist.

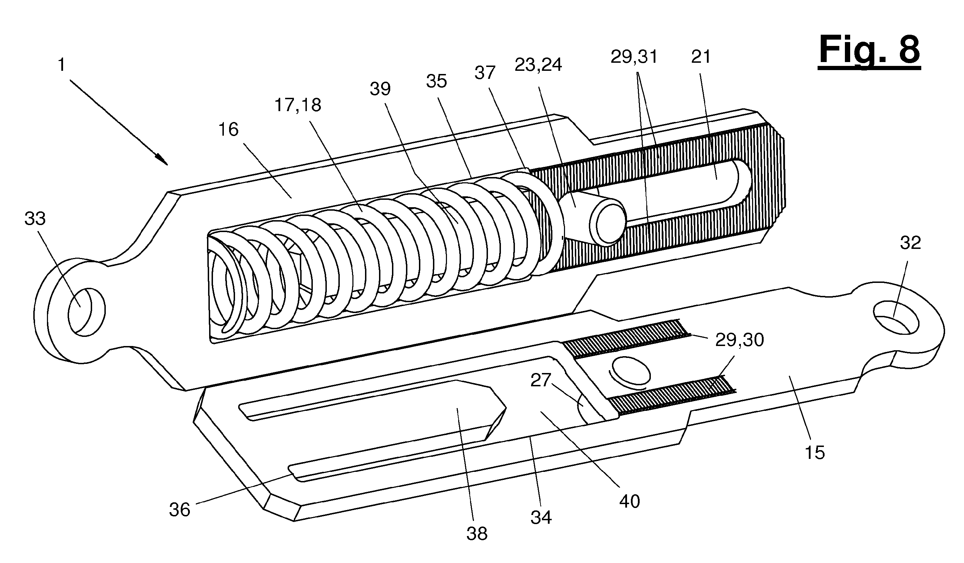

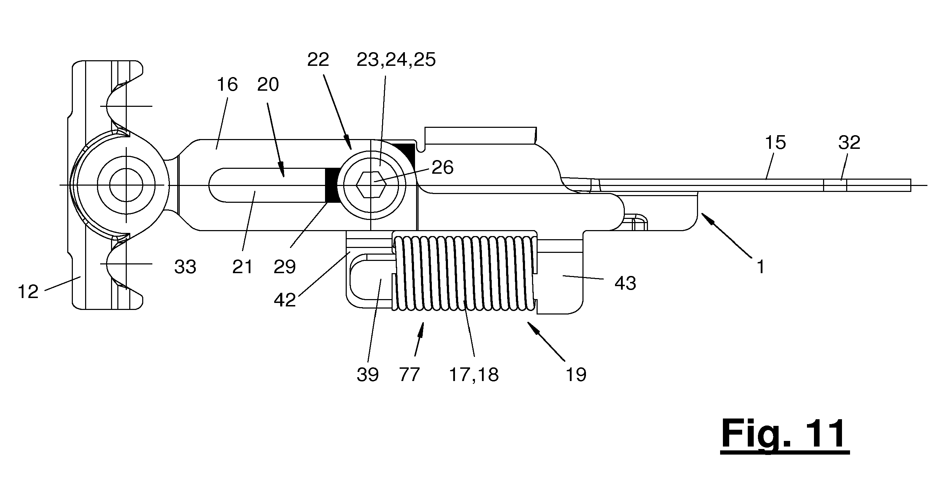

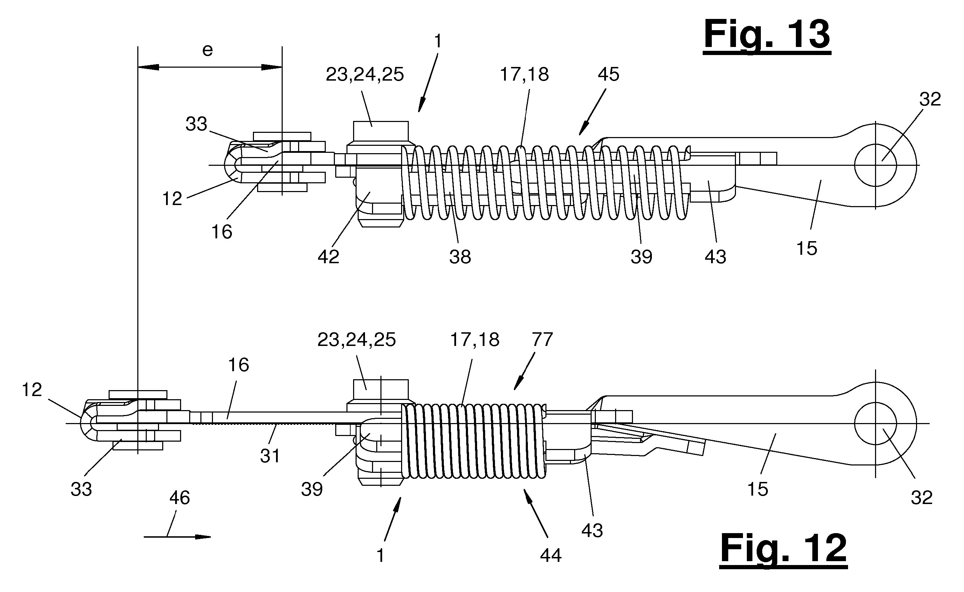

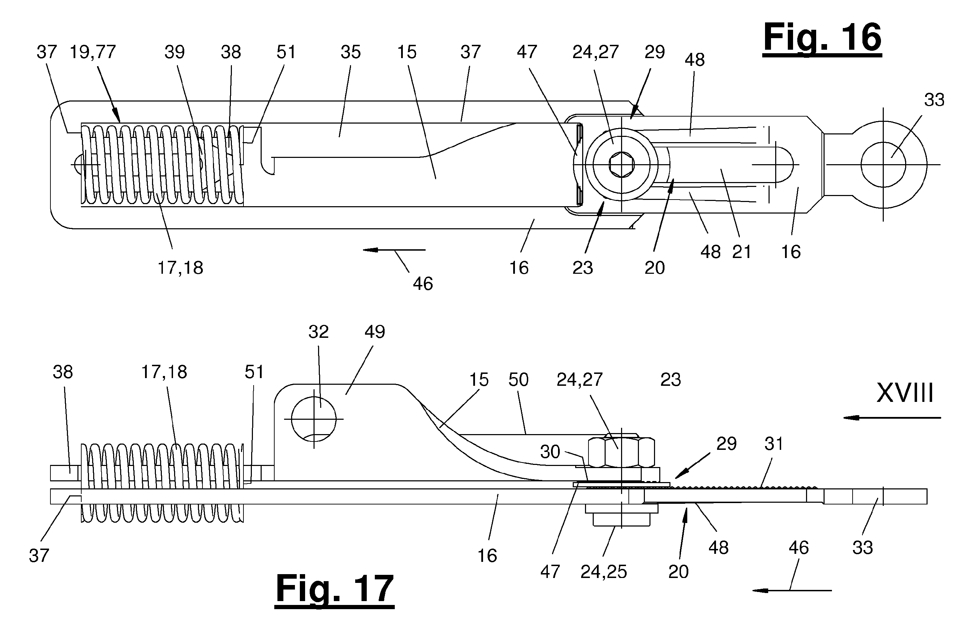

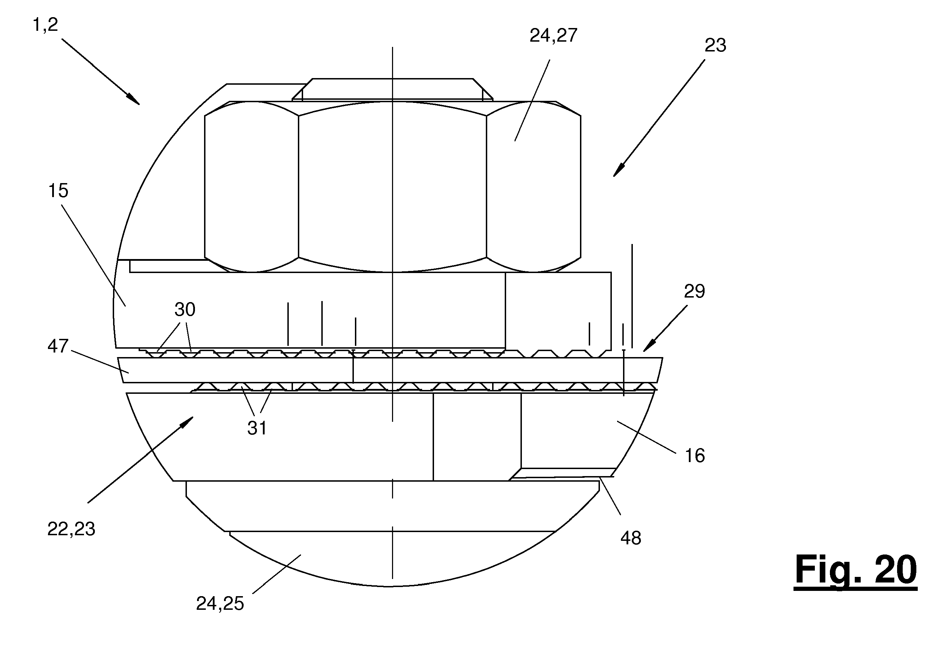

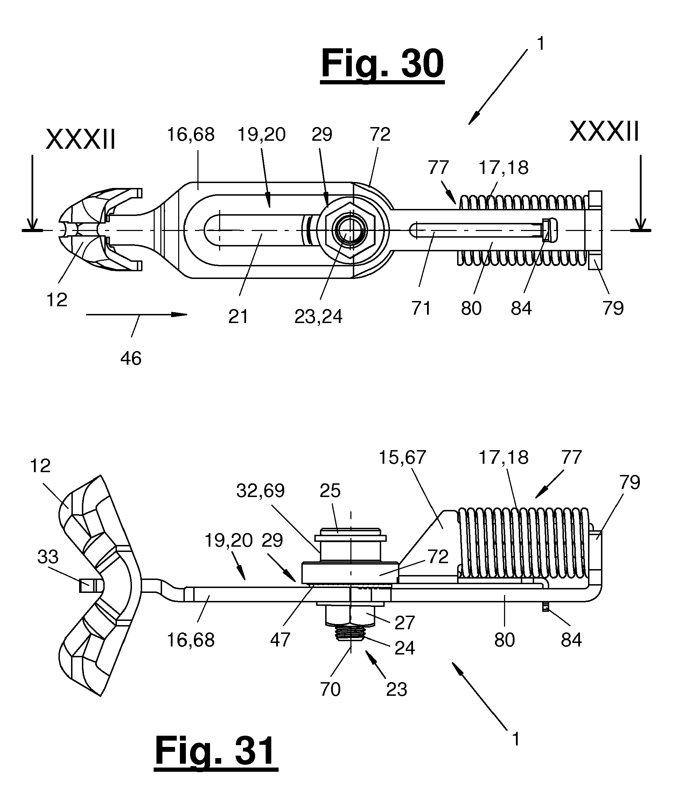

Figur 1 bis 20, 21 bis 25 und 26 bis 35 zeigen verschiedene Ausführungsformen einer Seilzugeinstellung (1).

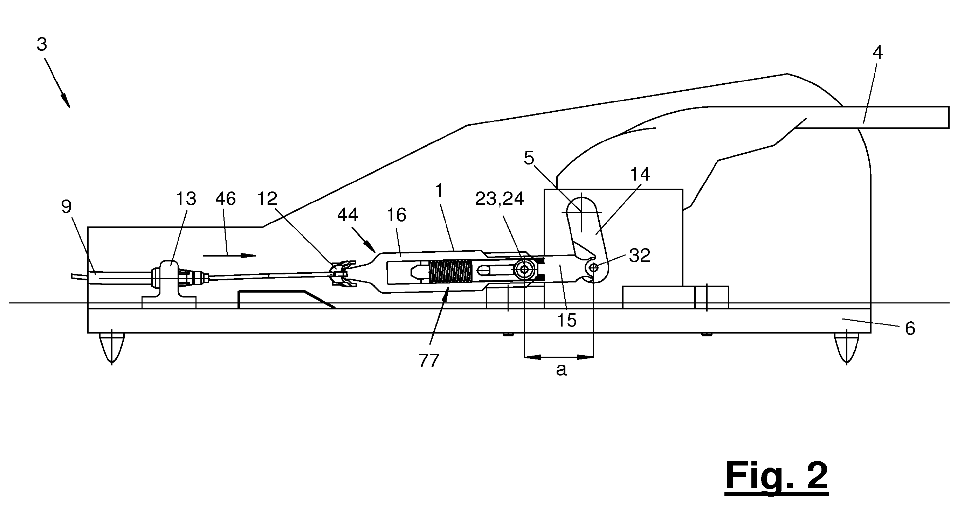

Bei der ersten Ausführungsform von Figur 1 bis 20 ist das Betätigungsorgan (4) über eine Mitnahmeeinrichtung (14), z.B. einen mitbewegten Schwenkhebel, mit der Seilzugeinstellung (1) mittels eines ersten endseitigen Lagers (32) verbunden. Am gegenüberliegenden Ende ist die Seilzugeinstellung (1) mittels eines zweiten Lagers (33), z.B. einem Auge oder einem Haken, mit mindestens einem Seilzug (9) mittelbar oder unmittelbar verbunden. Wie Figur 1 und 2 verdeutlichen, kann an einem hakenförmigen Lager (33) ein Waagbalken (12) oder dgl. angeordnet sein, an dem zwei oder mehr Seelen oder Seile (11) von Seilzügen (9) mit endseitigen Kugeln oder dgl. Verdickungen eingehängt sind. Hierbei bedarf es keiner Niete oder sonstiger Zusatzteile zum Herstellen der Verbindung. Am Gestell (6) können ferner eine oder mehrere Abstützungen (13) für die Mäntel (10) von einen oder mehreren Seilen oder Seilzügen angeordnet sein.

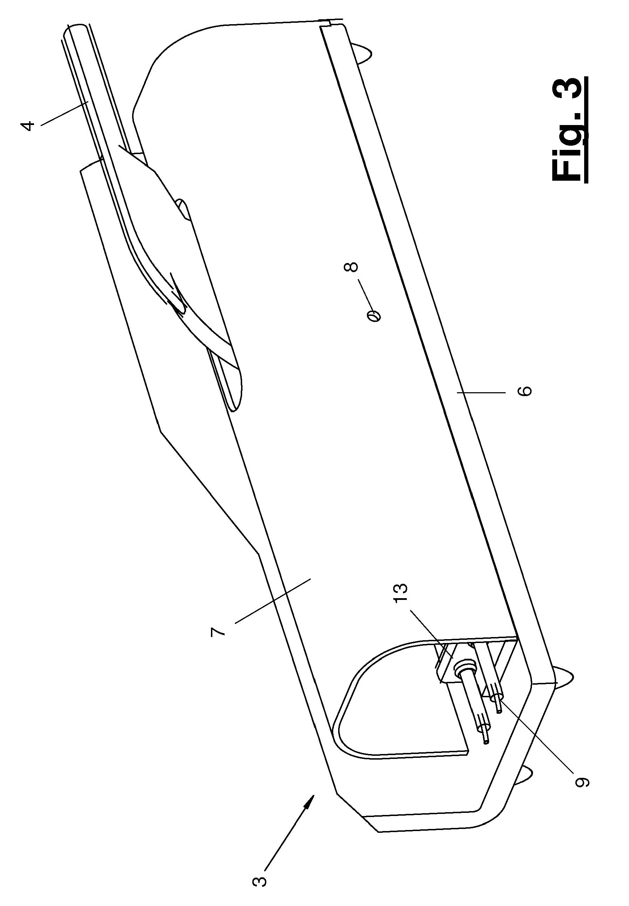

In der in Figur 3 gezeigten Einbaustellung im Fahrzeug (nicht dargestellt) kann die Seilzugeinstellung (1) von einem Gehäuse (7) umgeben sein, in dessen seitlicher Außenwand eine Öffnung (8) für den externen Bedienungszugang zur Seilzugeinstellung (1) angeordnet ist. Alternativ können an anderer Stelle oder in anderer Zahl mindestens eine Gehäuseöffnung (8) vorhanden sein.

Die Seilzugeinstellung (1) ist längenveränderlich und hat eine lineare Verstellkinematik. Sie kann sich z.B. unter Wirkung eines Spannelements (17) in Spann- oder Verstellrichtung (46) verkürzen, wodurch die angehängten ein oder mehreren Seilzüge (9) gespannt werden. Hierbei können Setzungen in den Seilzügen (9), Verschleiss an den Radbremsen oder andere Längungen im Betätigungsstrang aufgenommen und kompensiert werden.

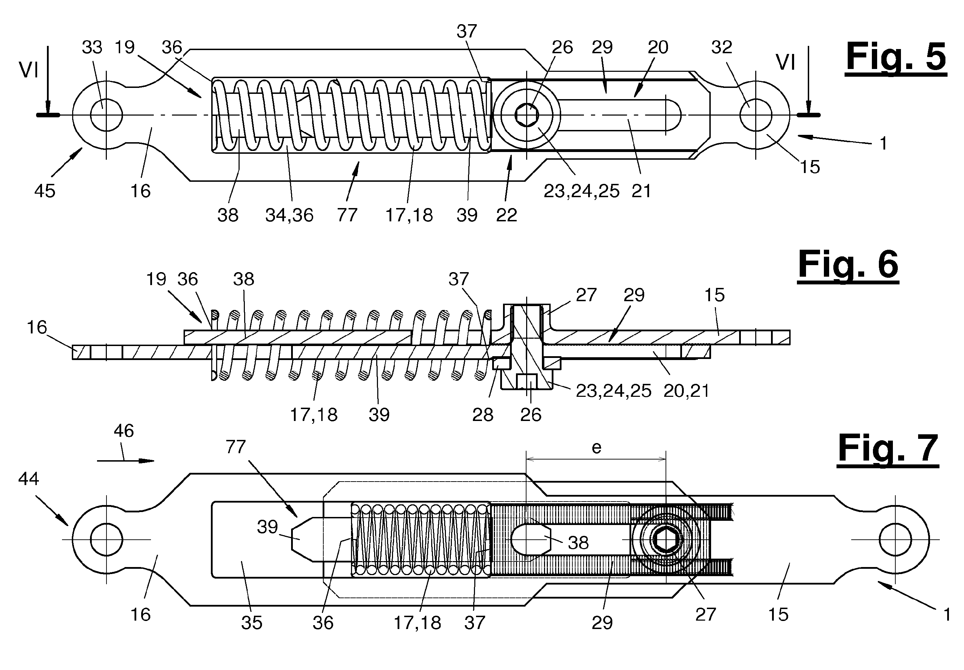

In der Montagestellung (44) hat die gezeigte Seilzugeinstellung (1) ihre maximale Länge, wobei die Seilzugeinstellung (1) mittels einer Fixiereinrichtung (22) versteift oder blockiert werden kann. In der blockierten Montagestellung (44), die eine Montagehilfe (2) darstellt, hat die Seilzugeinstellung (1) eine Überlänge, die ein zwängungsfreies Einhängen des oder der Seilzüge (9) erlaubt. Nach Lösen der Fixiereinrichtung (22) wird das zuvor blockierte Spannelement (17) wirksam, welches die Seilzugeinstellung (1) in Verstellrichtung (46) verkürzt. Je nach Maß des aufzunehmenden Verschleisses oder Spiels im Strang kann die Seilzugeinstellung (1) mehrere verkürzte Arbeitsstellungen (45) einnehmen. Sie hat dabei einen Einstellweg (e), wie er in Figur 7, 9 und 12 sowie 13 dargestellt ist.

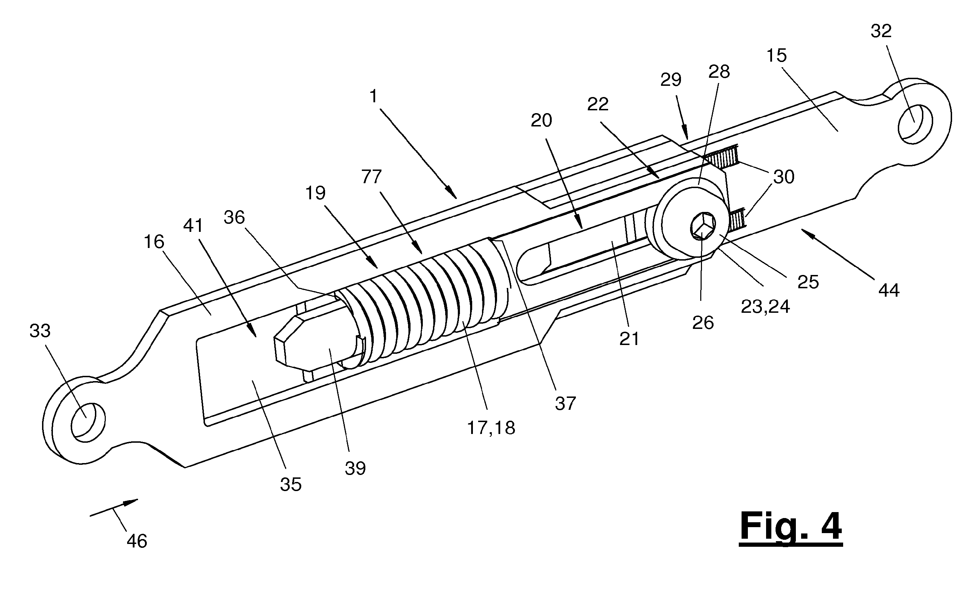

Figur 4 bis 9 und 10 bis 13 sowie 14 bis 20 zeigen drei erste Ausführungsvarianten der Seilzugeinstellung (1). In allen Ausführungsformen besitzt die Seilzugeinstellung (1) mehrere relativ zueinander bewegbare und von dem Spannelement (17) beaufschlagte Einstellelemente (15,16), die vorzugsweise als Zugbalken (15) und als Schleppbalken (16) ausgebildet sind. Die Einstellelemente (15,16) können eine längliche Form haben und in ihrer Längsrichtung relativ zueinander bewegbar sein.

In den gezeigten Ausführungsbeispielen sind zwei Einstellelemente (15,16) vorhanden. Das Einstellelement bzw. der Zugbalken (15) ist z.B. mit dem Betätigungsorgan (4) über das Lager (32) verbunden. Das Einstellelement bzw. der Schleppbalken (16) ist über das Lager (33) mit den ein oder mehreren Seilzügen (9) direkt oder über das Ausgleichselement (12) verbunden. Bei der Verschleißaufnahme wird der Schleppbalken (16) in Spannrichtung (46) relativ zum Zugbalken (15) bewegt.

Die Einstellelemente (15,16) weisen eine gegenseitige Führung (19) auf und können mittels der Fixiereinrichtung (22) in unterschiedlichen Relativstellungen zueinander lösbar arretiert werden. Das Spannelement (17) steht mit beiden Einstellelementen (15,16) im Eingriff. Die Führung (19) kann in Spannrichtung (46) ausgerichtet sein.

Die Führung (19) kann in allen Ausführungsformen z.B. eine Langlochführung (20) mit einer bevorzugt axiale und geraden Ausrichtung aufweisen, die auch mit der Fixiereinrichtung (22) zusammenwirken kann. Ferner kann das Spannelement (17) ein weiteres, axial distanziertes Führungsmittel (77) darstellen und die gegenseitige Führung und den Zusammenhalt der Einstellelemente (15,16) bewirken. Die Einstellelemente (15,16) können durch entsprechende Formgebung ihrerseits das Spannelement (17) führen.

Die Fixiereinrichtung (22) weist in den gezeigten Ausführungsformen zur formschlüssigen Fixierung ein Rastgesperre (29) mit einem Spannmittel (23) auf. Mit dem Spannmittel (23) kann das Rastgesperre (29) geschlossen werden, was z.B. durch gegenseitige Annäherung und durch ein Zusammenspannen der beiden Einstellelemente (15,16) geschieht. Bei dem Öffnen des Spannmittels (23) kann das Rastgesperre (29) gelöst werden, wodurch die Einstellelemente (15,16) voneinander frei kommen und vom Spannelement (17) in Axialrichtung beaufschlagt sowie relativ zueinander bewegt werden können. In der geschlossenen Raststellung ist das Spannelement (17) blockiert.

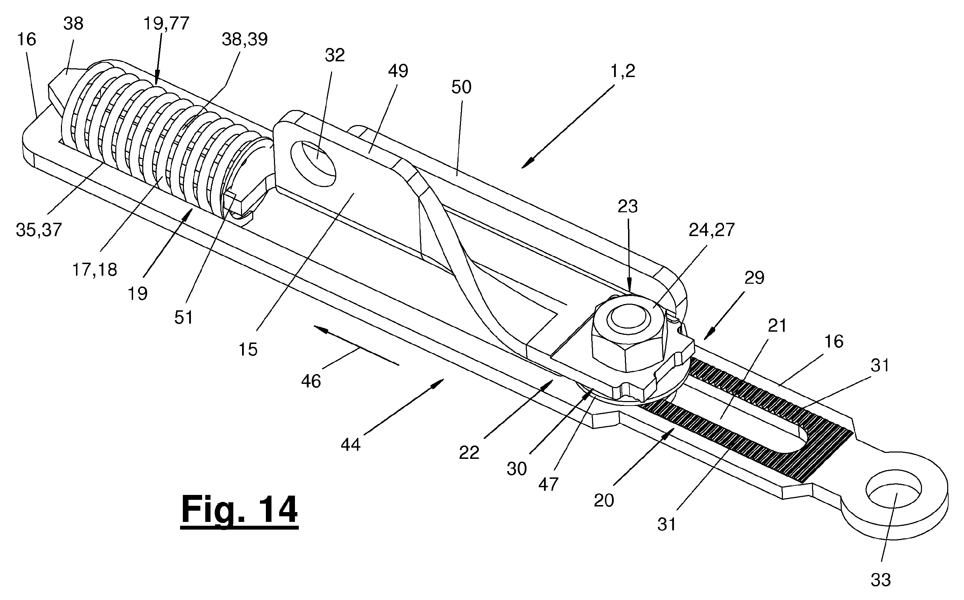

Bei den beiden Varianten von Figur 4 bis 9 und 10 bis 13 findet eine unmittelbare Verrastung der Einstellelemente (15,16) statt. Ihre Verstellung bzw. Arretierung erfolgt in feinen Stufen entsprechend der Zahnteilung des Rastgesperres (29). In der dritten Variante von Figur 14 bis 20 ist eine mittelbare Verrastung mit Rastgesperre (29) gezeigt, die eine stufenlose Verstellung erlaubt.

Das Rastgesperre (29) kann in den beiden Varianten von Figur 4 bis 9 und 10 bis 13 zusammenwirkende Rastelemente (30,31) aufweisen, die an den einander zugewandten Seiten, insbesondere Innenseiten der Einstellelemente (15,16) angeordnet sind und die in Arretierstellung ineinander greifen. Die Rastelemente (30,31) können z.B. Zahnleisten sein, deren Zähne quer zur Längsrichtung und Verstellrichtung (46) der Seilzugeinstellung (1) ausgerichtet sind. Alternativ können die Rastelemente (30,31) andere Formgebungen, z.B. Wellenlinien, ein Noppenraster und ggf. ein Öffnungsraster oder dgl. der Elementinnenflächen sein, die formschlüssig ineinander greifen können. In weiterer Abwandlung kann die Rastfunktion auch kraftschlüssig bzw. durch Reibschluss unter Wirkung des Spannmittels (23) erzielt werden. Die Rastelemente (30,31) können in diesem Fall aufgeraute Reibflächen oder Oberflächen bzw. Beläge mit einem erhöhten Reibwert sein.

Die Rastelemente (30,31) können im Bereich der Langlochführung (20) angeordnet sein. Beispielsweise kann das axial bzw. in Richtung (46) ausgerichtete Langloch (21) am Einstellelement (16) zumindest an seinen Längsseiten, vorzugsweise umlaufend, von einem Rastelement (31) umgeben sein. Am anderen Einstellelement (15) kann ein entsprechend zugeordnetes kürzeres Rastelement (30) vorhanden sein, welches z.B. aus zwei schmalen längsgerichteten Zahnleisten besteht.

Das Spannmittel (23) kann in unterschiedlicher Weise ausgebildet sein. Im gezeigten Ausführungsbeispiel besteht es aus einer Klemmschraube (24) mit einem Schraubenkopf (25) und einem Gewindeschaft, der durch das Langloch (21) am Einstellelement (16) ragt. Die zugehörige Mutter (27) ist an der Außenseite des anderen Einstellelements (15) angeordnet. Sie kann dort fest angeordnet sein und z.B. als angeformte Hülse mit einem Innengewinde ausgebildet sein. Eine Mutter (27) kann auch mit Schweißpunkten oder auf andere Weise befestigt sein.

Das Spannmittel (23) durchsetzt die Einstellelemente (15,16) und spannt sie zusammen. Das Spannmittel (23) befindet dabei auch im Bereich der Langlochführung (20) und ragt durch das Langloch (21).

Eine Lagefixierung der Mutter (27) am einen Einstellteil (15) hat den Effekt, dass der Abstand (a) von der Mutter (27) bzw. der Klemmschraube (24) zum Lager (32) des einen Einstellteils (15) und damit zum Betätigungsorgan (4) fest eingestellt und konstant ist. In der in Figur 3 gezeigten Lösestellung des Handbremshebels (4) befindet sich durch diesen Umstand das Spannelement (23) an einer definierten Stelle und ist dort durch die kleine Öffnung (8) im Gehäuse (7) von außen her zugänglich. Aus Platzgründen ist es günstig, wenn die Klemmschraube (24) am Schraubenkopf (25) einen versenkten Innensechskant (26) aufweist, der von außen mit einem Inbusschlüssel erreichbar ist. Unter dem Schraubenkopf (25) kann eine die Spannfläche vergrößernde Scheibe (28) angeordnet sein.

Das Spannelement (17) kann in unterschiedlicher Weise ausgebildet sein. In den gezeigten Ausführungsbeispielen besteht es jeweils aus einer Feder (18), die vorzugsweise als Druckfeder und als Schraubenfeder ausgebildet ist. Die Feder (18) kann auch mehrfach vorhanden sein. Sie umgreift Teile der Einstellelemente (15,16) gemeinsam. Hierfür ist insbesondere eine zylindrische Schraubenfeder von Vorteil, die eine Elementaufnahme in ihrem hohlen Innenraum ermöglicht.

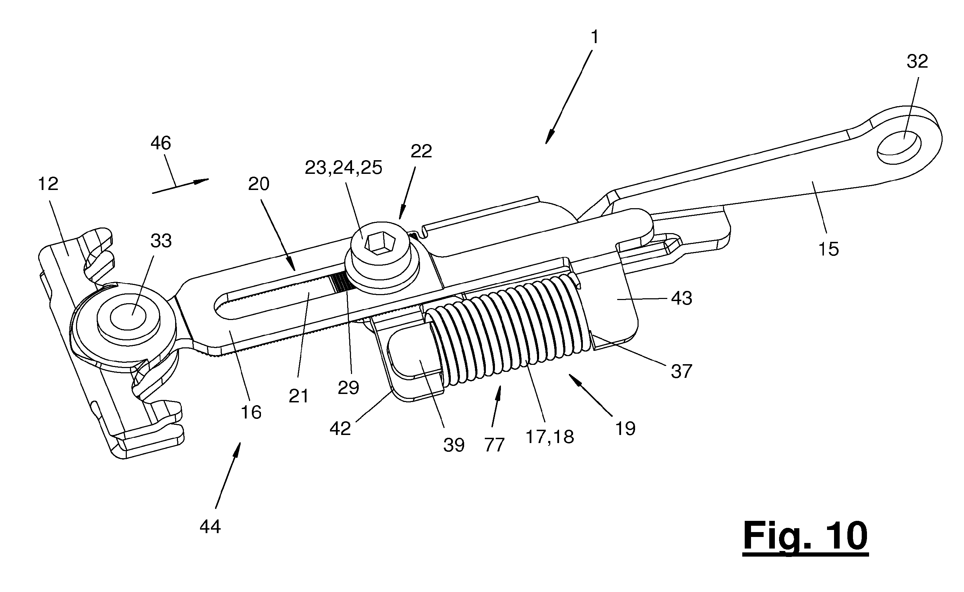

Die Einstellelemente (15,16) sind in der vorerwähnten Weise als flache, parallele und aneinanderliegende Zug- und Schleppbalken ausgebildet. Sie können insbesondere gestanzte oder geschnittene dünne Blechteile sein, die ggf. auch an einer oder mehreren Stellen gebogen sind, z.B. im Bereich der Mutter (27) oder an den Enden und den dortigen Lagern (32,33) gemäß der zweiten Variante von Figur 10 bis 13. Im hinteren und einander benachbarten Bereich haben die Einstellelemente (15,16) eine längliche Platten- oder Scheibenform. Nach vorne verjüngen sie sich zum jeweiligen Lager (32,33). Sie werden von der Fixiereinrichtung (22) in der Spannstellung zusammengedrückt und bauen dadurch in diesem Bereich sehr klein und schmal. Bei gelöster Fixiereinrichtung (22) ist ein gegenseitiges Abheben und axiales Verstellen der Einstellelemente (15,16) entlang der axialen Führung (19) möglich.

Die Einstellelemente (15,16) weisen gegeneinander gerichtete Führungsmittel auf, die mit dem Spannelement (17) in Eingriff stehen. Dies können insbesondere längliche Zungen (38,39) sein, die flach bauen und ggf. in Spannstellung aneinanderliegen. Die Zungen (38,39) werden vom Spannmittel (17), insbesondere einer Feder (18), umfangseitig umgriffen und eingeschlossen. Die Zungen (38,39) können einander in den verschiedenen Stellungen (44,45) überlappen und dabei auch mit ihren Innenseiten kontaktieren. Hierdurch wird eine Federführung (77) gebildet.

In der ersten Ausführungsform von Figur 4 bis 9 sind die Zungen (38,39) in der Hauptebene der Einspannelemente (15,16) angeordnet und aus deren Scheibenkörper ausgeschnitten. Hierfür weisen die Scheibenkörper bzw. die Zug- und Schleppbalken (15,16) jeweils eine längliche und in Axialrichtung sich erstreckende Ausnehmung (34,35) auf. Die Ausnehmungen (34,35) können länger als die Zungen (38,39) sein, sodass sich am freien Zungenende ein Freiraum (40,41) ergibt, über den eine gegenseitige Montage der Einstellelemente (15,16) unter Zungeneingriff am Spannelement (17) möglich ist.

Die Zungen (38,39) gehen an ihrem rückwärtigen Ende in den Korpus der Einstellelemente (15,16) über. Die Zungen (38,39) haben eine geringere Breite als die Ausnehmungen (34,35), so dass an dieser besagten Übergangsstelle ein Ausnehmungsrand (36,37) und Federanschlag gebildet wird, an dem sich das Spannelement (17), insbesondere eine Feder (18), axial abstützen kann. In der Ausführungsform von Figur 4 bis 9 sind die Ausnehmungen (34,35) in ihrer Weite oder Breite so groß bemessen, dass die Feder (18) in den Ausnehmungen (34,35) aufgenommen werden kann. Die längsgerichteten Ausnehmungsränder können hierbei eng zur Außenkontur des Spannelements (17) bzw. der Feder (18) benachbart sein, wodurch im Zusammenwirken eine axiale Führungsfunktion geschaffen wird. Der bevorzugt zylinderische Hüllmantel einer Schraubenfeder und die axialen Ausnehmungsränder führen sich dadurch gegenseitig und bilden ein Element (77) der Führung (19).

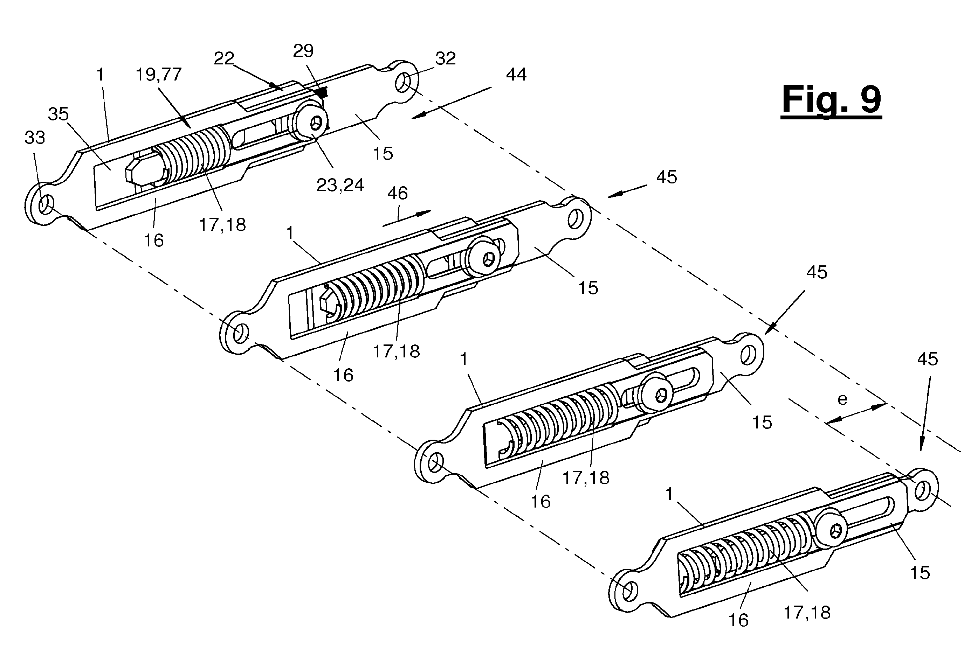

Wie Figur 4 und 9 verdeutlichen, führt der Federangriff an den Ausnehmungsrändern (36,37) zu einer gegeneinander gerichteten Stellbewegung der gelösten Einstellelemente (15,16). In der Montagestellung (44) ist die Feder (18) maximal komprimiert. Bei ihrer je nach Verschleissgröße variierenden Federentspannung werden die Einstellelemente (15,16) in die gezeigten Arbeitsstellungen (45) bewegt, wobei die Seilzugeinstellung (1) in ihrer Gesamtlänge gemäß Figur 9 immer weiter in Spann- oder Verstellrichtung (46) verkürzt wird.

Eine gegenseitige Verstellung und Verschleissaufnahme findet bei gelöster Fixiereinrichtung (22) statt. Dies kann in Wartungsintervallen oder bei Bedarf geschehen. Anschließend wird die Fixiereinrichtung (22) wieder geschlossen. Dann spannt die Fixiereinrichtung (22) die Einstellelemente (15,16) zusammen und blockiert die Feder (18) bzw. das Spannelement (17) in der aktuellen Stellung. Durch diese gegenseitige Verriegelung oder Fixierung hat die Seilzugeinstellung (1) eine feste Länge und bildet einen starren Übertragungskörper zwischen dem Betätigungsorgan (4) und dem oder den Seilzügen (9).

In der Variante von Figur 10 bis 13 weisen die Einstellelemente (15,16) extern angeordnete axiale Zungen (38,39) auf, die an seitlich von den Scheibenkörpern oder Balkenkörpern abstehenden Ansätzen (42,43) angeordnet sind. Auch bei dieser Ausführungsform sind die Zungen (38,39) gegeneinander gerichtet und können sich in einigen oder in allen Stellungen (44,45) in Axialrichtung überlappen.

In der zweiten Variante ist außerdem eine Abwandlung des Lagers (33) dargestellt, welches als Auge zum direkten und drehbaren Anschluss eines Waagbalkens (12) ausgebildet ist. Auch das andere Lager (32) kann als Auge ausgebildet sein. Das Ausführungsbeispiel verdeutlicht außerdem die Möglichkeit zu einer abgekanteten Formgebung der Einstellelemente (15,16).

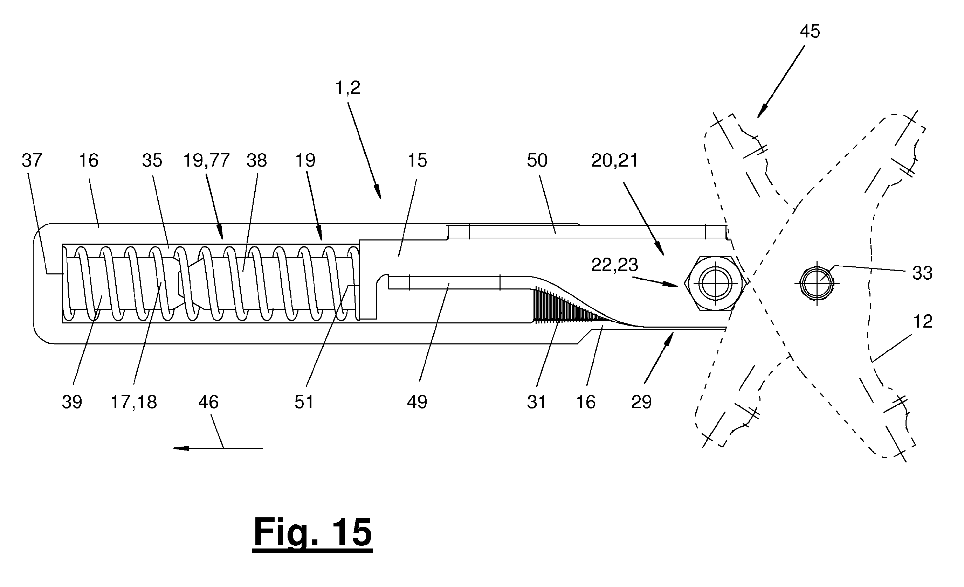

Die in Figur 14 bis 20 gezeigte dritte Variante der Seilzugeinstellung (1) unterscheidet sich von den ersten beiden Ausführungsvarianten in mehrfacher Hinsicht. Das Einstellteil (16), welches vorzugsweise über das Lager (33) mit dem Ausgleichselement (12) oder den Seilzügen (9) verbunden ist, hat hier eine im wesentlichen flache Streifenform und besitzt eine größere Länge als das andere Einstellteil (15), welches mit dem Betätigungsorgan (4) über das Lager (32) verbunden werden kann. Das Einstellelement (16) weist am hinteren Ende die in Figur 15 ersichtliche axiale Ausnehmung (35) auf, von deren hinterem Rand (37) eine Zunge (39) nach vorn zum Lager (33) hin absteht. Am vorderen Ende hat das Einstellelement (16) das axiale Langloch (21) mit einem beidseitigen Rastelement (31), das hier z.B. Zahnleisten wie in den anderen Ausführungsbeispielen aufweist.

Das Einstellelement (15) hat eine abgewinkelte Form und kann ebenfalls wie das Einstellelement (16) aus einem flachen Blechstreifen gefertigt sein. Beim Einstellelement (15) ist im mittleren und rückwärtigen Endbereich ein Blechteil freigeschnitten und um ca. 90° zur Bildung einer zentralen hochstehenden Finne (49) abgewinkelt. Die Finne (49) trägt das Lager bzw. Auge (32), welches eine um 90° gedrehte Ausrichtung zum Lager (33) haben kann. Am rückwärtigen Ende des Einstellelements (15) bleibt ein quer stehend flacher Streifen stehen, der einen Anschlag (51) für das Spannelement (17) bzw. die Druckfeder (18) bildet. Vom rückwärtigen Blechstreifen ragt außerdem eine rückwärtige schmale Zunge (38) weg. Beide Zungen (38,39) befinden sich in der Ausnehmung (35) und sind von der Druckfeder (18) umschlossen, die ihrerseits an den Rändern der Ausnehmung (35) geführt ist. Auf diese Weise wird wie in den ersten beiden Ausführungsbeispielen eine Federführung (77) und ein Teil der Führung (19) gebildet. Bei gelöster Fixiereinrichtung (22) drückt die am Einstellelement bzw. Zugbalken (15) sich abstützende Feder (18) das als Schleppbalken ausgebildete Einstellelement (16) in Spann- und Einstellrichtung (46) nach hinten.

Das Einstellelement (15) kann an der anderen Längsseite eine ebenfalls nach oben abgewinkelte Leiste (50) zu unterschiedlichen Zwecken aufweisen, z.B. zur seitlichen Anlage und Führung an der Einbaustelle in einem Fahrzeug. Am vorderen Ende weist das Einstellelement (15) einen ebenen plattenförmigen Bereich auf, durch den sich das Spannmittel (23) quer erstreckt und der an der Unterseite ein Rastelement (30), z.B. mehrere Zahnleisten, tragen kann. Die Frontseite des Zugbalkens (15) kann konturiert sein und kann ggf. in der in Figur 15 gezeigten letzten Arbeitsstellung (45) den Waagbalken (12) kontaktieren und seinen Kippwinkel begrenzen. Figur 15 zeigt die möglichen Schwenkstellungen des Waagbalkens (12).

In der dritten Variante kommt eine andere Ausführung des Rastgesperres (29) zum Einsatz, die für eine mittelbare Verrastung und eine stufenlose Verstellbarkeit der Einstellelemente (15,16) sorgt. Sie kann auch bei den anderen Ausführungsvarianten alternativ zur direkten Verrastung eingesetzt werden. Zwischen den Einstellelementen (15,16) und ihren Innenseiten und einander zugekehrten Rastelementen (30,31) ist ein Zwischenteil (47) angeordnet, welches mit den Rastelementen (30,31) in formschlüssigen Eingriff tritt. Das Zwischenteil (47) kann eine Scheibe mit z.B. ebenen Oberflächen aufweisen. Die Oberflächen können parallel zueinander ausgerichtet sein. Alternativ ist eine schräge Ausrichtung unter Bildung eines keilförmigen Querschnitts möglich. Das Zwischenteil (47) kann in weiterer Abwandlung eine oder zwei ballige Oberflächen aufweisen.

Das Zwischenteil (47) kann im Bereich des Spannmittels (23) angeordnet und als Ringscheibe ausgebildet sein, die vom Spannmittelschaft, insbesondere der Schraube (24), durchsetzt wird. Beim Anziehen des Spannmittels (23) drücken sich die Rastelemente (30,31) in die Scheibenoberfläche. Hierbei stützen sich in Fixierstellung die Einstellelemente (15,16) gegenseitig über das Zwischenteil (47) ab. Die bei Betätigung der Bremseinrichtung in Spannrichtung (46) wirkenden Kräfte werden von den Rastelementen (30,31) und den Formschluss über das Zwischenteil (47) übertragen.

Das Zwischenteil (47) kann aus einem verformbaren Material bestehen oder zumindest an den Kontaktflächen zu den Rastelementen (30,31) ein verformbares Material aufweisen. Es kann z.B. eine Leichtmetallscheibe, insbesondere eine Aluminiumscheibe, mit Zentralbohrung sein. Das Scheibenmaterial kann alternativ Eisen bzw. Stahl oder ein anderes Metall oder ggf. ein nichtmetallischer Werkstoff oder ein Verbundwerkstoff sein. Die Form kann kreisrund oder länglich sein. Durch die gegenseitige Entkoppelung der Rastelemente (30,31) kann eine stufenlose Verstellbarkeit der Seilzugeinstellung (1) bewirkt werden. In jeder Spann- und Fixierstellung prägen sich die Rastelemente (30,31) neu in das Zwischenteil (47) ein, welches ggf. unterschiedliche Drehstellungen bei den verschiedenen Fixierungen einnehmen kann.

Das Spannmittel (23) kann auch in dieser Ausführungsform als Spannschraube (24) ausgebildet sein, die am einen Ende einen Schraubenkopf (25) aufweist und am anderen Ende mit einer Mutter (27) im Eingriff steht. Die Schraube (24) kann in diesem Fall lose sein. Alternativ kann z.B. die Mutter (27) am Zugbalken (15) fixiert sein, der in dieser Variante nur eine kleine Durchgangsöffnung für den Schraubschaft aufweist.

Zumindest eines der Einstellelemente (15,16) kann eine schräge Anlagefläche (48) für das Spannmittel (23) aufweisen. Im gezeigten Ausführungsbeispiel weist der Schleppbalken (16) an seiner Unterseite eine solche schräge Anlagefläche (48) auf, die zum Lager (33) hin abfällt. Ihr Neigungswinkel (α) gegen die horizontale Ebene bzw. die Hauptebene des Schleppbalkens (16) beträgt z.B. 1°. Der Winkel (α) kann auch kleiner oder größer sein. Er kann sich z.B. zwischen 0,5° und 2,5° bewegen.

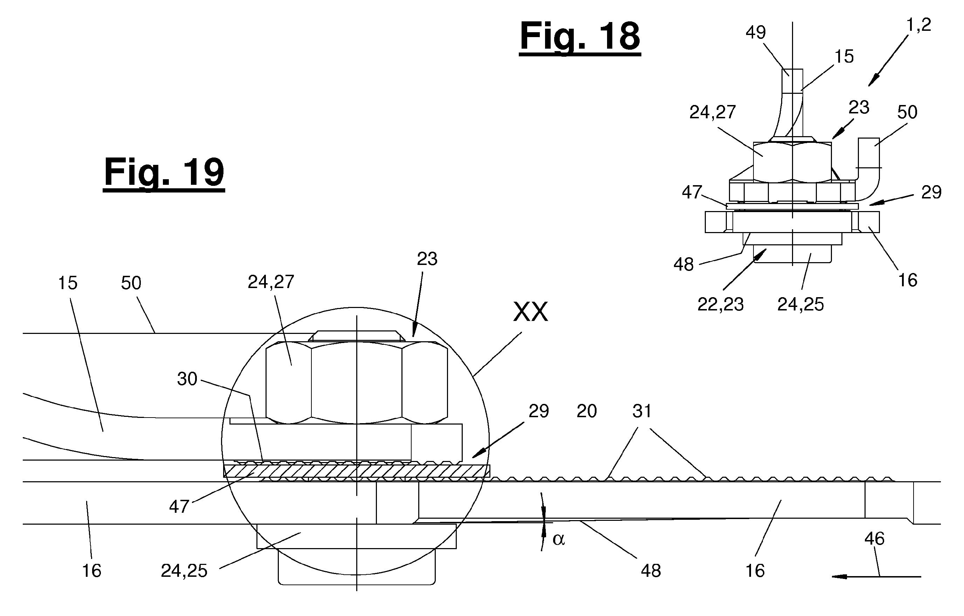

Wie Figur 14 und 19 mit der dargestellten Montagestellung (44) verdeutlichen, kann der Beginn der schrägen Anlagefläche (48) vom rückwärtigen Ende des Langlochs (21) nach vorn distanziert sein. An diesen vom Auge (33) entfernten Langlochende kann ein Sockel mit parallelen Ober- und Unterseiten des Schleppbalkens (16) vorhanden sein, der in der ausgezogenen Montagestellung (44) wirksam ist. In den späteren Arbeitsstellungen (45) bei verkürzter Seilzugeinstellung (1) wird die schräge Anlagefläche (48) wirksam. Sie bewirkt eine zunehmende Verringerung der Dicke des Einstellelements (16) und sorgt für eine optimale Klemmung und Fixierung des Spannmittels (23) in den jeweiligen Arbeitsstellungen (45). Durch die abnehmende Spanndicke kann auch die Mutter (27) am Schraubschaft von Mal zu Mal weiter zugedreht werden. Die schräge Anlagefläche (48) ist außerdem günstig für die Selbsthemmung und verhindert ein Lösen der Spannschraube bei fahrtbedingten Erschütterungen. Die gezeigte Schraubenanordnung kann alternativ umgedreht sein. Eine schräge Anlagefläche kann auch im Mutternbereich am anderen Einstellelement (15) vorhanden sein.

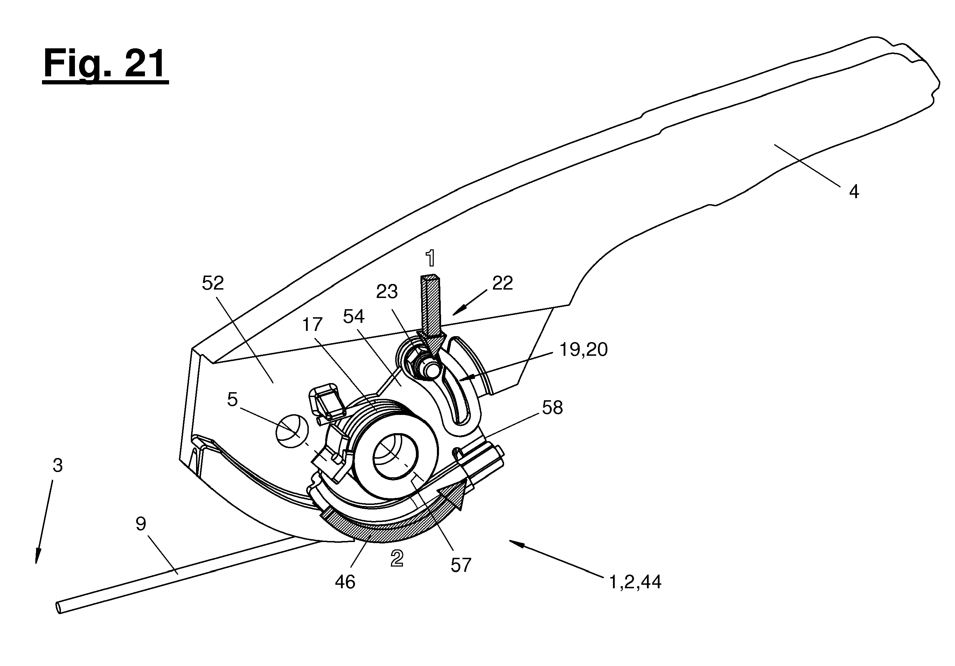

In der Ausführungsform von Figur 21 bis 25 ist die Seilzugeinstellung (1) anders ausgebildet und in anderer Weise dem Betätigungsorgan (4), insbesondere dem Handbremshebel, zugeordnet. Sie benutzt dabei ohnehin vorhandene Bauteile und belegt nur sehr wenig Platz. Sie kann außerdem im Unterschied zu den vorbeschriebenen Ausführungsformen eine rotatorische Verstellkinematik haben.

Die Seilzugeinstellung (1) weist wieder zwei Einstellelemente (52,54) auf, die hier als Korpus (52) des Betätigungsorgans (4) und als Nachstellelement (54) ausgebildet sind.

Das Nachstellelement (54) kann am Korpus (52) beweglich gelagert sein. Dies kann eine translatorische und/oder rotatorische Lagerung sein. Hierüber lässt sich das Nachstellelement (54) relativ zum Korpus (52) und zum Betätigungsorgan (4) bewegen. Das Nachstellelement (54) ist mit dem Zugelement (9) verbunden und wird von einem Spannelement (17) in einer Spannrichtung oder Verstellrichtung (46) beaufschlagt. Das Spannelement (17) kann ebenfalls am Korpus (52) gelagert werden und wirkt zwischen dem Korpus (52) und dem Nachstellelement (54).

Im Weiteren weist die Seilzugeinstellung (1) eine am Korpus (52) angreifende Fixiereinrichtung (22) zur lösbaren Arretierung des Nachstellelements (54) in verschiedenen Stellpositionen (44,45) am Korpus (52) auf. Entsprechend dieser Stellpositionen (44,45) wird das Zugelement (9) in Nachstellrichtung (46) mitgenommen und dadurch gespannt.

Figur 21 zeigt diese prinzipielle Ausbildung und Funktion. Hierbei ist auch ersichtlich, dass die Seilzugeinstellung (1) eine Montagehilfe (2) bilden kann, um das Zugelement (9) mit dem Betätigungsorgan (4) koppeln und montieren zu können. Hierfür kann die Seilzugeinstellung (1) eine in Figur 21, 22 und 24 gezeigte Montagestellung (44) einnehmen

In der gezeigten Ausführungsform ist das Nachstellelement (54) als ein flacher, insbesondere plattenartiger Schwenkträger (55) ausgebildet, der mittels eines Schwenklagers (56) seitlich am Korpus (52) um eine quer dazu gerichtete Achse (57) schwenkbar gelagert ist. Das Nachstellelement (54) kann z.B. als gestanztes oder geschnittenes und ggf. gebogenes Blechteil ausgebildet sein. Der Korpus (52) kann aus Leichtmetall bestehen, z.B. aus einer Magnesium- oder Aluminiumlegierung, und kann als Gussteil ausgebildet sein.

Das Nachstellelement (54) weist eine Aufnahme (58) für das Ende des Zugelements (9), z.B. das verdickte Seilende, auf. Das Nachstellelement (54) besitzt ferner eine gebogene Führung (60) für einen biegeelastischen Endbereich des Zugelements (9). Die Führungsbiegung kann konzentrisch zur Achse (57) sein und kann als geprägter oder gebogener Führungskanal ausgeführt sein. Sie kann am Ende einen geraden Abschnitt aufweisen, der an der Aufnahme oder Seilaufnahme (58) mündet. Die Aufnahme (58) kann durch eine Ausklinkung (59) des Blechteils gebildet sein, durch die Platz für das verdickte Seilende geschaffen wird, das sich am oberen Rand der Führung (60) abstützt. Die Führung (60) kann nutenartig ausgebildet sein und den Endbereich aufnehmen und seitlich zumindest teilweise umschließen, wobei über die Seilaufnahme (58) das verdickte Seilende und der anschließende Seilbereich in Anlage mit der Führungswandung gedrückt werden.

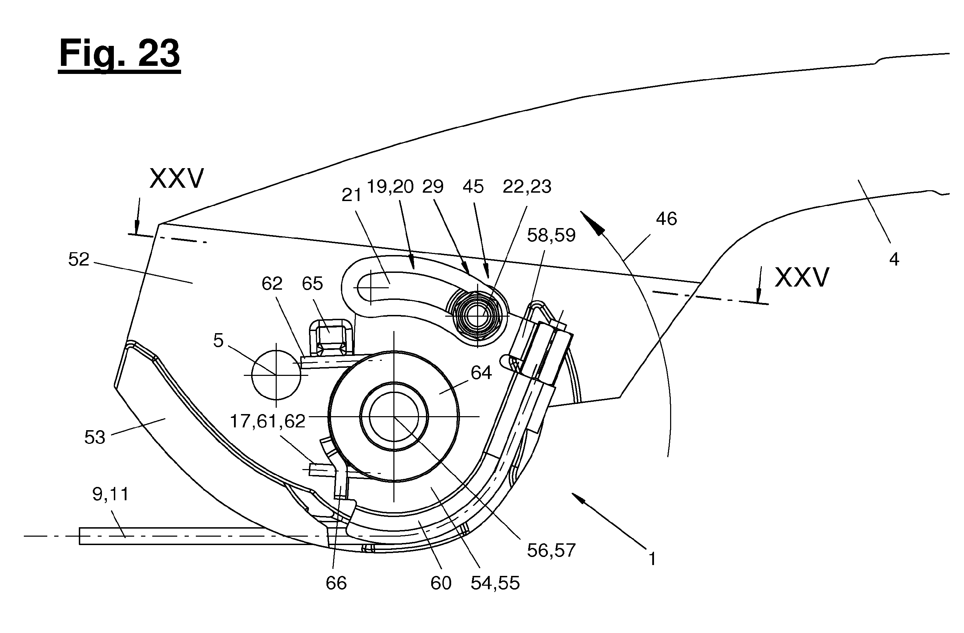

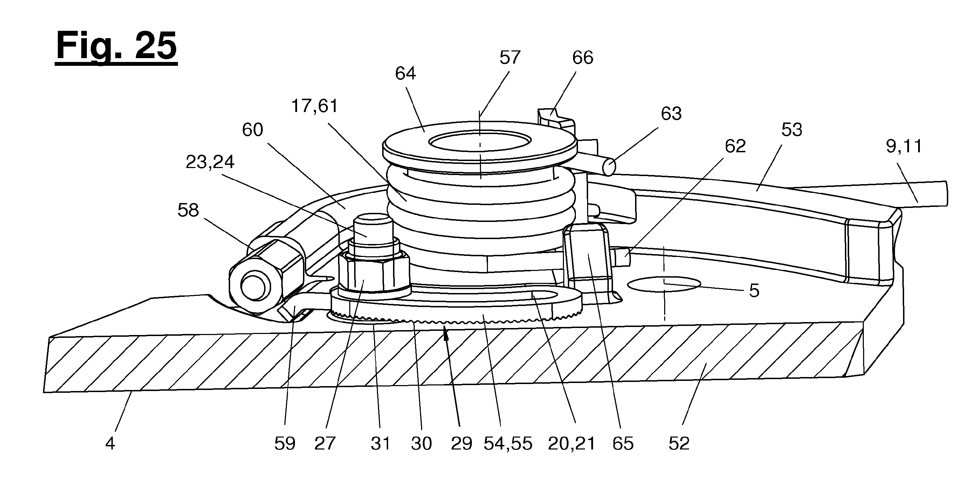

Das Spannelement (17) ist z.B. als Feder (61) ausgebildet, die sich über eine Abstützung (65), z.B. einen Federanschlag am Betätigungsorgan (4) bzw. am Korpus (52), einerseits und über eine entsprechende Abstützung (66) bzw. einen abgebogenen Federanschlag am Nachstellelement (54) andererseits abstützt. Figur 23 und 25 verdeutlichen die Anordnung im Detail.

In der gezeigten Ausführungsform des schwenkbaren Nachstellelements (54) ist die Feder (61) als Drehfeder ausgebildet, die auf einer zylindrischen bzw. hülsenartigen Federaufnahme (64) mit ihren Wicklungen aufgenommen ist und mit ihren Federenden (62,63) an den besagten Abstützungen (65,66) anliegt. Die Federaufnahme (64) kann konzentrisch zur Achse (57) ausgerichtet und am Nachstellelement (54) montiert sein.

Die Fixiereinrichtung (22) ist z.B. als Klemmeinrichtung ausgebildet und wirkt zwischen dem Korpus (52) und dem Nachstellelement (54). Sie weist im gezeigten Ausführungsbeispiel eine Langlochführung (20) und eine formschlüssige und/oder kraftschlüssige Arretierung mit einem am Korpus (52) angreifenden lösbaren Spannmittel (23) auf.

In der gezeigten Ausführung hat das Nachstellelement (54) ein konzentrisch zur Lagerachse (57) gebogenes Langloch (21), welches sich am oberen Rand des Nachstellelements (54) befindet. Das z.B. als Klemmschraube (24) ausgebildete Spannmittel (23) ragt mit seinem Schaft durch das Langloch (21) und kann mittels einer Mutter (27) fixiert werden. Hierdurch werden der Korpus (52) und das Nachstellelement (54) klemmend zusammengedrückt und arretiert.

Für die Klemmwirkung und Arretierung hat der Korpus (52) einen integrierten Klemmbereich, z.B. mit aufgerauhter Oberfläche, wo die Nachstellung ausreichend Reibung produziert um die geforderten Kräfte zu übertragen und das Nachstellelement (54) in den verschiedenen Stellpositionen (44,45) zu fixieren. Wahlweise kann der Korpus (52) auch ein separates Fixierelement aufweisen. Schrägen an den Klemmbereichen verbessern die Spann- und Haltewirkung.

Die Arretierung kann alternativ oder zusätzlich ein zwischen dem Nachstellelement (54) und dem Korpus (52) wirksames Rastgesperre (29) für eine formschlüssige Verbindung aufweisen.

Das Rastgesperre (29) kann z.B. von einem im Bereich des Langlochs (21) angeordneten Rastelement (30) gebildet werden, welches z.B. als gebogene Zahnleiste am Lochrand und an der zum Korpus (52) weisenden Unterseite des Nachstellelements (54) angeordnet ist. Am Korpus (52) kann ein damit zusammenwirkendes anderes Rastelement (31) vorhanden sein. Dies kann ebenfalls eine Zahnleiste sein. Im gezeigten Ausführungsbeispiel handelt es sich um einen scheibenförmigen Ansatz des Korpus (52), in den sich die Zahnleiste (30) beim Spannen eingraben kann.

Die Fixiereinrichtung (22) arretiert in gespannter Stellung das Nachstellelement (54) und den Korpus (52) gegenseitig und blockiert dabei das Spannmittel (23). Nach Lösen oder Lockern der Fixiereinrichtung (22) kann das Spannmittel (23) wirksam werden und das Nachstellelement (54) kann sich in Spannrichtung (46) relativ zum Korpus (52) bewegen, d.h. im vorliegenden Ausführungsbeispiel um die Achse (57) drehen. Hierbei wird das Zugelement (9) gespannt, wobei etwaige Setzungen im Mantel, Längungen des Seils (11), Verschleiss an den Radbremsen oder dgl. aufgenommen werden können. Anschließend wird die Fixiereinrichtung (22) wieder gespannt. Figur 23 verdeutlicht diese Schritte.

Die Seilzugeinstellung (1) hat hierbei einen Verstellweg, der durch die Länge des Langlochs (21) vorgegeben und ggf. begrenzt sein kann. Das Nachstellelement (54) nimmt gemäß seiner Spann- und Nachstellfunktion dabei verschiedene Arbeitspositionen (45) ein.

Figur 21 zeigt eine Montagestellung (44) mit dem Spannmittel (23) am einen Langlochende. In der Montagestellung (44) ist die Seilaufnahme (58) soweit gegenüber dem Zugelement bzw. dem Seilzug (9) angenähert, dass das Zugelement (9) ohne Zwängung am Nachstellelement (54) und seiner Aufnahme (58) eingehängt werden kann. Es kann dabei auch in die Führung (60) eingelegt werden. Wenn anschließend die Fixiereinrichtung (22) geöffnet wird, kann das Spannelement (23) das Zugelement (9) spannen und in die erste wirksame Arbeitsstellung (45) bringen. Figur 23 zeigt einen Zustand in einer fortgeschrittenen Arbeitsstellung (45), hier der Endstellung, in der bereits mehrmals Setzungen bzw. Längungen kompensiert wurden.

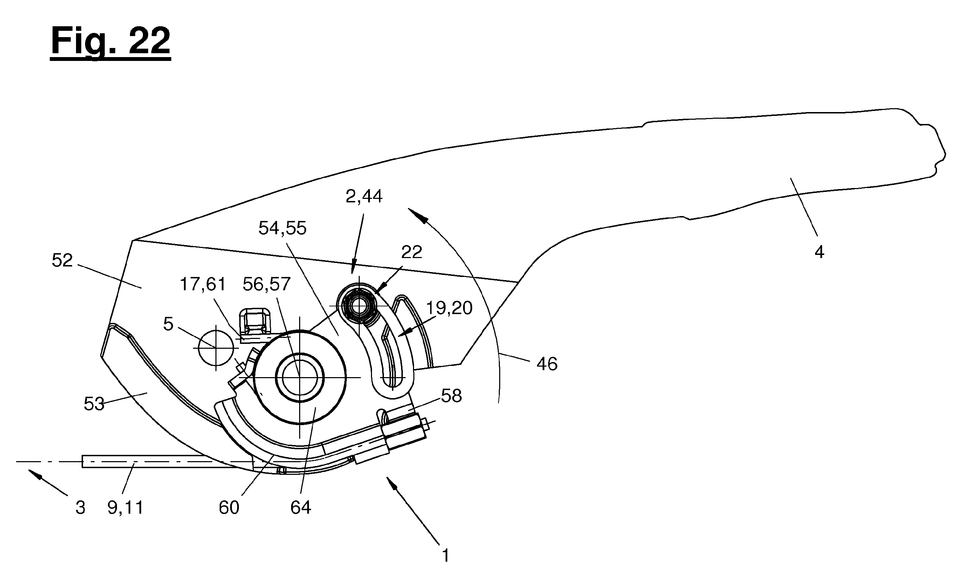

Wie Figur 22, 23 und 25 verdeutlichen, können die Schwenkachse (5) des Betätigungsorgans (4) und die Schwenkachse (57) des Nachstellelements (54) mit Abstand nebeneinander am unteren verbreiterten Bereich des Korpus (52) angeordnet sein. Sie können alternativ zusammenfallen.

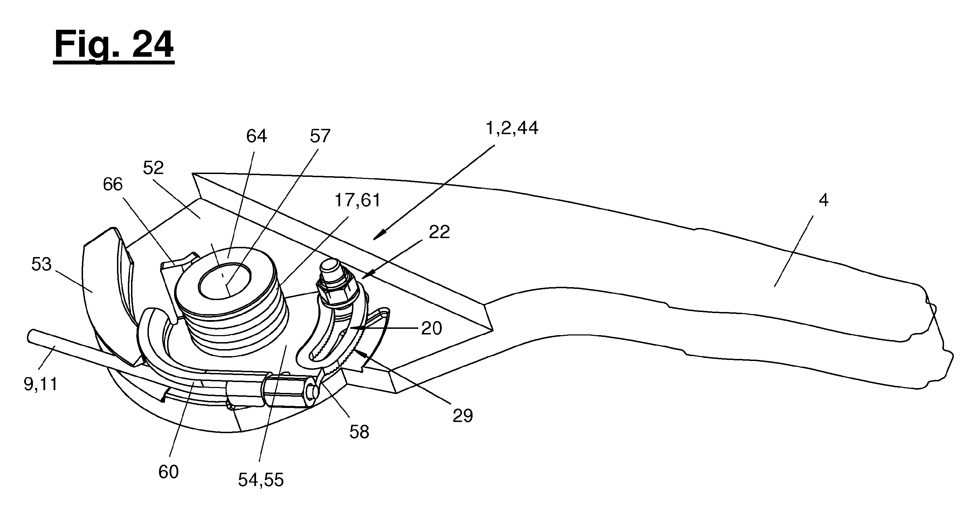

Der Korpus (52) kann gemäß Figur 21 und 24 am unteren verbreiterten Bereich eine Stufe und eine verringerte Dicke aufweisen. Er kann hier eine plattenartige Form haben und die Seilzugeinstellung (1) aufnehmen. Der Korpus kann ferner gemäß Figur 24 unterhalb der Langlochführung (20) stellenweise eine Vertiefung aufweisen. Der eigentliche Klemmbereich bzw. Rastbereich um die ggf. am Korpus (52) fest montierte Klemmschraube kann dadurch definiert und abgegrenzt werden. Außerdem kann hier die Ausklinkung (59) kollisionsfrei eintauchen.

Ferner ist ersichtlich, dass das Betätigungsorgan (4) am Rand des Korpus (52) eine gebogene Führung (53) für einen biegeelastischen Endbereich des Zugelements (9) aufweist. Die Führung (53) kann z.B. als nutenförmige Prägung oder als anmontierte bzw. angeformte Aufnahmenut für den besagten Endbereich ausgebildet sein. Die Führung (53) kann eine gebogene Form aufweisen und kann dabei konzentrisch zur Hebelschwenkachse (5) gekrümmt sein. Über die Hebeldrehung greift die nach unten offene Seilführung oder Nut (53) nach und nach am Seil bzw. Zugelement (9) an.

Die Seilführung (53) geht in die Führung (60) am Nachstellelement (54) über. In der anfänglichen Montagestellung (44) können die Führungen (53,60) einander z.B. gemäß Figur 21, 22 und 24 überlappen. In einer fortgeschrittenen Arbeitsstellung (45) gemäß Figur 23 können die Führungsenden voneinander distanziert sein. Der Endbereich des Zugelements (9) wird hierdurch stets und unabhängig von der Dreh- und Spannstellung des Nachstellelements (54) zuverlässig geführt.

Wie Figur 22 und 23 verdeutlichen, wird bei einer Drehung des Betätigungsorgans (4) um die Schwenkachse (5) das fixierte Nachstellelement (54) und seine Aufnahme (58) mitgenommen. Hierdurch wird das Zugelement (9) gespannt. Der Abstand der Aufnahme (58) und des Seilendes zur Schwenkachse (5) ist dabei in allen Stellungen (44,45) größer als die Distanz zwischen der Achse (5) und der Seilführung (53).

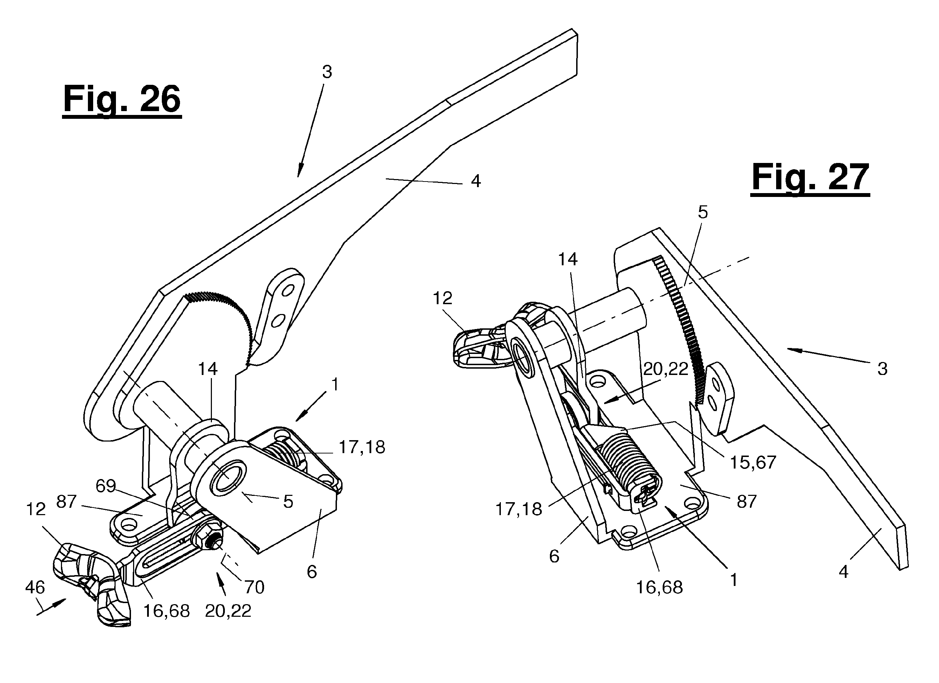

Figur 26 bis 35 zeigen eine dritte Ausführungsform einer Seilzugeinstellung (1) an einer Bremseinrichtung (3).

Die Seilzugeinstellung (1) weist ähnlich wie im ersten Ausführungsbeispiel Stellelemente (15,16) auf, die hier als Fixierträger (67) und als Schleppbalken (68) ausgebildet sind. Es ist auch ein Spannelement (17), vorzugsweise eine Druckfeder (18), und eine Führung (19), insbesondere eine Langlochführung (20) und eine Federführung (77), vorhanden. Desgleichen gibt es eine Fixiereinrichtung (22) mit einem Spannmittel (23) und einem Rastgesperre (29).

Die Seilzugeinstellung (1) kann über ein z.B. hakenförmiges Lager (33) am Schleppbalken (68) mit einem Zugelement (9) direkt oder z.B. mittels des dargestellten Ausgleichselements oder Waagbalkens (12) verbunden werden. Die Seilzugeinstellung (1) kann eine Montagehilfe (2) mit verschiedenen Stellpositionen (44,45) der vorbeschriebenen Art bilden, um das Zugelement (9) mit dem Betätigungsorgan (4) koppeln und montieren zu können. Die Einstellelemente (67,68) können einfache und kostengünstige Bauteile, insbesondere Blechteile der vorbeschriebenen Art sein.

Der Fixierträger (67) ist über die Fixiereinrichtung (22), insbesondere das Spannmittel (23), mit einem Betätigungsorgan (4), insbesondere einem um eine Achse (5) schwenkbaren Handbremshebel, direkt oder über eine Mitnahmeeinrichtung (14) verbunden. Die Fixiereinrichtung (22) hat hierbei eine Doppelfunktion und bildet zugleich das Lager (32) mit der Lagerachse (70) für die Verbindung zwischen der Seilzugeinstellung (1) und dem Betätigungsorgan (4). Die Lage des Spannmittels (23) und damit der Zugangsort für ein manuelles Bedienen und Nachstellen ist über das Betätigungsorgan (4) und dessen Schwenkstellung definiert.

Die Seilzugeinstellung (1) der dritten Ausführungsform hat im Prinzip die gleiche Funktion wie in den vorherigen Ausführungsbeispielen. Die Einstellelemente (67,68) sind über eine Führung (19) aneinander geführt und werden gegenseitig durch das zwischen innen wirkende Spannelement (17) belastet. Die blockierte Fixiereinrichtung (22), die auch hier als Klemmeinrichtung ausgebildet ist, fixiert die gegenseitige Relativstellung der Einstellelemente (67,68). Im Lösezustand gibt die Fixiereinrichtung (22) die Einstellelemente (67,68) frei, die sich unter Einwirkung des Spannelements (17) und der Führung (19) relativ zueinander bewegen und dabei das Zugelement (9) anspannen können. Die am Ende der Kompensationsbewegung eingenommene Relativstellung wird dann wieder fixiert.

Das Spannmittel (23) ist auch in diesem Ausführungsbeispiel als Klemmschraube (24) ausgebildet, wobei ihr Schraubenkopf (25) eine Zusatzfunktion hat und eine ringförmige Lagerfläche (69) für das Lager (32) bildet. Das Einstellelement (67) wird in diesem Ausführungsbeispiel von einem Trägerbügel (81) und dem Spannelement (23) gebildet. Das Einstellelement (67) ist direkt am Betätigungsorgan (4) gelagert (32) und folgt in seiner Ausrichtung dessen Schwenkbewegungen besonders gut.

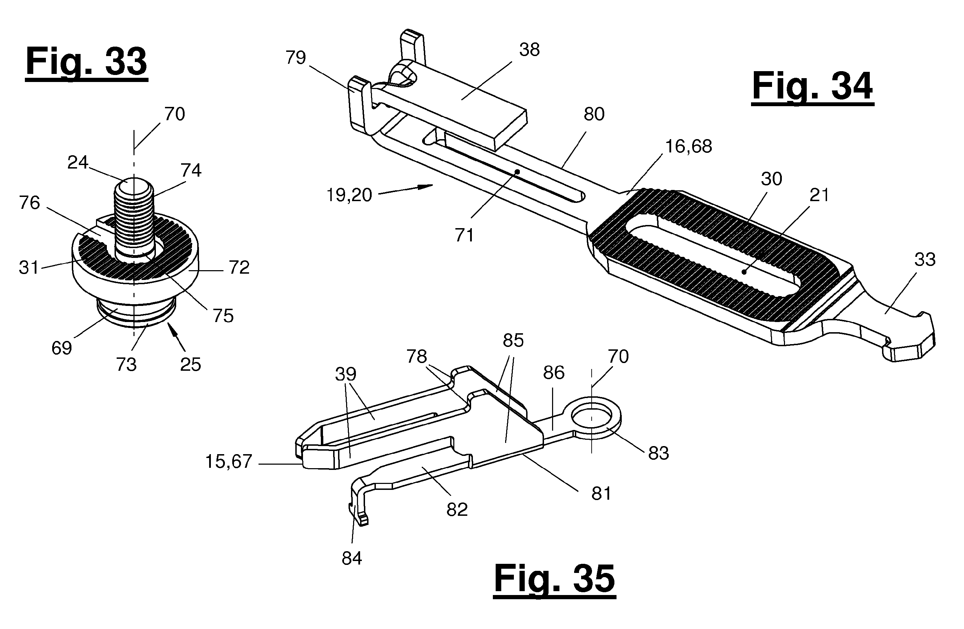

Figur 33 bis 35 verdeutlichen die Einzelgestaltung der Einstellelemente (67,68), des Trägerbügels (81) und der Klemmschraube (24).

Der Trägerbügel (81) und der Schleppbalken (68) sind mittels der Führung (19) aneinander geführt, wobei die Führung (19) wiederum als Langlochführung (20) ausgebildet ist, die in diesem Fall allerdings zwei in Axialrichtung und Verstellrichtung (46) fluchtende gerade Langlöcher oder Schlitze (21,71) aufweist, die bei der gezeigten Ausführungsform im Schleppbalken (68) angeordnet sind. Der Schleppbalken (68) ist als schmales und lang gestrecktes Bauteil, z.B. als dünnwandiger Blechstreifen, ausgebildet und weist einen etwas verbreiterten Bereich mit dem einen geraden Schlitz (21) und den dazu einseitig oder beidseitig angeordneten Rastelementen (30) auf, die z.B. als quer zur Längsrichtung orientierten Zahnleisten ausgebildet sind.

Am vorderen Ende ist der Haken (33) angeordnet. Der Schleppbalken (68) besitzt ferner einen rückseitigen Fortsatz (80), der das zweite gerade schlitzartige Langloch (71) aufnimmt und der etwas schmäler ist. Der Schlitz (71) kann am rückwärtigen Ende eine hammerkopfartige verbreiterte Zugangsöffnung aufweisen, die zur Montage des Trägerbügels (81) verwendet werden kann. Am freien Ende ist der Fortsatz (80) zweifach umgebogen, wobei das freie und wieder nach vorn gerichtete Ende eine Zunge (38) für die Federführung (77) bildet. Das Spannmittel (23) ist parallel und seitlich versetzt zur Langlochführung (20) angeordnet. An der rückwärtigen Knickstelle und am rückwärtigen Ende des Schleppbalkens (68) bildet der hochgebogene Bereich einen Federanschlag (79), der z.B. gabelförmig ausgebildet ist und zwei hochstehende Arme beidseits der Zunge (38) aufweist.

Der in Figur 35 gezeigte Trägerbügel (81) ist als mehrfach abgebogenes und z.B. gekantetes Metallteil ausgebildet und kann z.B. aus einem dünnwandigen Blechstreifen bestehen. Der Trägerbügel (81) besitzt ein plattenförmiges Basisteil (82), welches am vorderen Ende ein Auge (83) oder einen Ring aufweist, welches im montierten Zustand das Spannmittel (23), insbesondere die Schraube (24), aufnimmt und konzentrisch zur Lagerachse (70) angeordnet ist.

Am gegenüberliegenden Ende weist das Basisteil (82) einen abwärts gerichteten Ansatz (84) auf, der im montierten Zustand in den Schlitz (71) eingreift und dort längsbeweglich geführt ist. Der Ansatz (84) kann am freien Ende eine hammerkopfförmige Verbreiterung aufweisen, die ein Abheben aus dem Schlitz (71) verhindert.

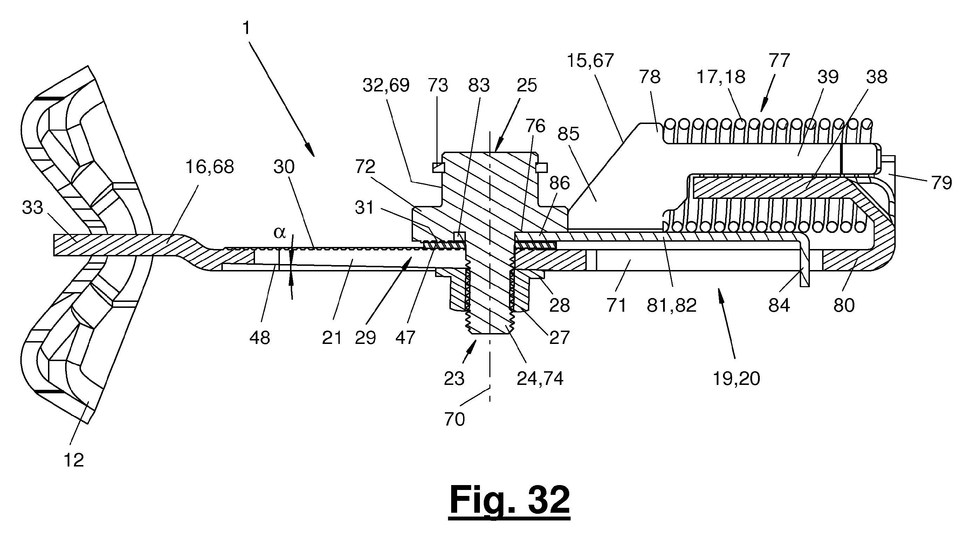

Vom Basisteil (82) stehen ein oder mehrere Arme (84) ab, die einen Zungenträger bilden und an ihrem freien Ende eine oder mehrere, z.B. zwei erhabene und parallel zum Basisteil (82) ausgerichtete Zungen (39) für die Zungenführung (77) bilden. Im montierten und in Figur 32 im Schnitt dargestellten Zustand greifen die Zungen (38,39) gemeinsam in das z.B. als Schraubenfeder ausgeführte Spannelement (17). Die z.B. zwei Arme (85) weisen an der Übergangsstelle zu den Zungen (39) eine Erhebung auf, welche einen Federanschlag (78) bildet.

Die Schraube (24) besitzt einen Zapfen bzw. Gewindebolzen (74) und einen zum Schraubenkopf (25) hin anschließenden glattwandigen Schaft (75), der etwas verdickt sein kann und der im montierten Zustand durch das Auge (83) mit geringem Spiel greift.

Der modifizierte Schraubenkopf (25) weist eine abgestufte Form auf und besitzt einen im Durchmesser verbreiterten Bund (72), der an der Unterseite ein Rastelement (31), z.B. in Form von Zahnleisten, aufweist. Der Bund (72) weist auf dieser Stirnseite außerdem eine radiale Nut (76) auf, die sich im Bereich des Schaftes (75) zu einer Ringnut erweitert. In der Nut (76) werden im montierten Zustand das Auge (83) und ein schmaler Steg (86) aufgenommen, der sich am Basisteil (82) im Bereich zwischen dem Auge (83) und dem oder den Armen (85) befindet.

An den breiten Bund (72) schließt sich ein schmalerer zylindrischer Zapfenbereich an, der die vorgenannte Lagerfläche (69) bildet, die einerseits vom Bund (72) und am anderen Zapfenende von einem Halter (73) begrenzt wird, der z.B. als Federring ausgebildet ist. Auf der Lagerfläche (69) greift das Mitnahmeelement (14) mit einem Auge drehbar an, wodurch das Lager (32) gebildet wird.

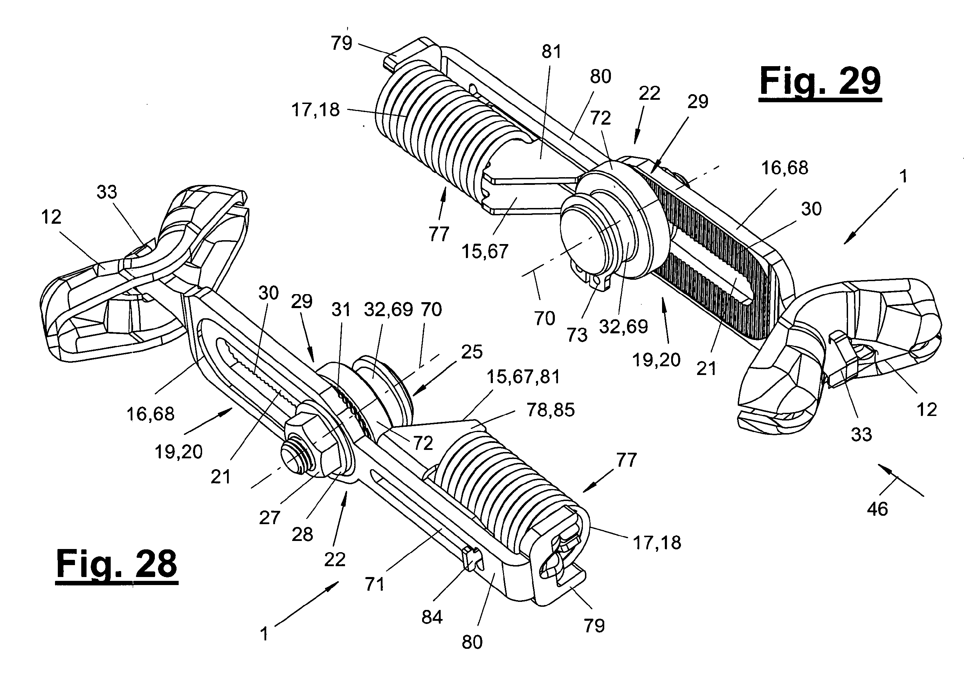

Figur 28 bis 32 zeigen die Seilzugeinstellung (1) in montierter Stellung. Das Spannmittel (23) weist eine Mutter (27), ggf. mit einer Scheibe (28) und außerdem in der bevorzugten Ausführungsform ein Zwischenteil (47), z.B. in Form einer Ringscheibe auf, welches entsprechend der vorbeschriebenen Ausführungsform von Figur 18 bis 20 ausgebildet sein kann. Die Rastelemente (30,31) am Einstellelement (68) und am Bund (72) drücken beidseits gegen das Zwischenteil (47) und spannen es ein. Hierbei wird durch entsprechende Nutenabstimmung das Auge (83) und der Steg (86) im Formschluss zwischen dem Bund (72) und dem Zwischenteil (47) gehalten. Figur 32 zeigt diese Zuordnung.

Der Schleppbalken (68) erstreckt sich beidseits des Spannmittels (23) und des Lagers (32), wobei sein Fortsatz in Anzugrichtung (46) jenseits der Achse (70) liegt. Auch der Trägerbügel (81) und das Spannelement (17) befinden sich an der vom Zugelement bzw. Waagbalken (12) abgewandten Seite der Achse (70). Das Langloch (21) befindet sich vor der Achse (70). Die Seilzugeinstellung (1) braucht dadurch besonders wenig Platz und nutzt den vorhandenen Bauraum, insbesondere unter dem Griff des Handbremshebels (4) besonders gut aus. Das Zugelement bzw. der Waagbalken (12) kann trotz linearer Verstellkinematik besonders nah an den Handbremshebel (4) heranrücken. Die Seilzugeinstellung (1) kann mit dem in Ausgangsstellung in etwa mittigen Lager (32) den Schwenkbewegungen des Handbremshebels (4) besonders gut und zwängungsfrei folgen.

Zur Montage der Seilzugeinstellung (1) wird der Trägerbügel (81) mit dem Fortsatz (84) in den Schlitz (71) über die verbreiterte Zugangsöffnung eingeführt und eingehängt. Zuvor ist das Spannelement (17) auf die Zungen (38,39) aufgezogen worden. Anschließend wird die Schraube (24) mit dem Gewindebolzen (74) durch das Auge (83), die Ringscheibe (47) und den Schlitz (21) am Einstellelement (68) gesteckt und dann mit der Mutter (27) sowie ggf. einer Scheibe (28) fixiert. In der montierten Stellung sind die Einstellelemente (67,68) gegenseitig über den Ansatz (84) im Schlitz (71) und über das Spannmittel (23) im Auge (83) und im Schlitz (21) geführt.

Das Rastgesperre (29) wird von den Rastelementen (30,31) und deren Eingriff mit den Oberflächen des Zwischenteils (47) beim Spannen der Schraubverbindung geschlossen. Die Rastelemente (30,31) können sich ggf. in die Oberfläche der Ringscheibe (47) eingraben. Alternativ können die Rastelemente (30,31) direkt miteinander in Eingriff treten, wobei ein Zwischenteil (47) entfällt.

Ein Einstellelement (68) kann ferner im Bereich der Führung (19), insbesondere im Bereich des Langlochs (21), eine schräge Anlagefläche (48) mit einem Winkel α an der dem Rastelement (30) gegenüberliegenden Seite haben. Die Dicke des Einstellelements (68) nimmt dabei zum Lager (33) hin ab. Die Ausbildung und Funktion kann die gleiche wie im vorbeschriebenen Ausführungsbeispiel von Figur 19 sein.

Das Gestell (6) des Betätigungsorgans (4), insbesondere des Handbremshebels, hat z.B. gemäß Figur 26 und 27 eine bügelartige oder U-förmige Gestalt. Das Gestell (6) kann in dieser oder in einer anderen Ausführungsvariante eine Bodenplatte (87) aufweisen, die zu Montagezwecken in einem Fahrzeug sowie zur Aufnahme des beim Öffnen und/oder Spannen der Fixiereinrichtung (22) wirkenden Öffnungs- und/oder Anzug-Drehmoments dienen kann. Die Drehbewegung des Einstellelements (16,68) um die Lagerachse (70) kann durch Anschlag an der ebenen oder ggf. mit einer Anschlagerhebung versehenen Bodenplatte (87) begrenzt werden. Das Moment kann ggf. auch an einem Untergrund, insbesondere einem Karosserieteil, abgestützt werden, wenn die Bodenplatte (87) ggf. wie in Figur 26 eine rückwärtige Ausnehmung aufweist. Die Länge der Mitnahmeeinrichtung (14) kann so groß bemessen sein, dass die Seilzugeinstellung (1) in einem zur Momentenaufnahme geeigneten Abstand über der Bodenplatte (87) gehalten wird.

Abwandlungen der gezeigten und beschriebenen Ausführungsformen sind in verschiedener Weise möglich.

Bei den Ausführungsformen von Figur 1 bis 20 kann das Spannelement (23) z.B. anders ausgebildet sein und aus einem Schraubschaft bestehen, der an einem Einstellelement (15) fest oder mit Formschluss lösbar angeordnet ist, der vorzugsweise den besagten festen Abstand (a) hat und auf den endseitig eine konventionelle Mutter oder ggf. auch eine Hutmutter aufgesetzt sein kann. Ansonsten kann das Spann- oder Schraubelement (23,24) auch lose und in Axialrichtung verstellbar angeordnet sein.

Ferner können die Einstellelemente (15,16) und die anderen Bestandteile der Seilzugeinstellung (1) eine andere Formgebung und gegenseitige Anordnung haben. Gleiches gilt auch für das Rastgesperre (29) und dessen Rastelemente (30,31). Die Seilzugeinstellung (1) kann in Abwandlung der gezeigten Ausführungsformen auch zwischen zwei Seilzügen (9) angeordnet sein, wobei an den beiden äußeren Enden der Einstellelemente (15,16) jeweils mittelbar oder unmittelbar ein solcher Seilzug angeordnet ist. Die Lager (32,33) können bei den gezeigten Ausführungsformen in Axialrichtung der Seilzugeinstellung (1) fluchten bzw. auf oder an einer gemeinsamen Längsachse liegen, die vorzugsweise zentral und in Spannrichtung (46) verläuft. Sie können dabei wie bei der dritten Ausführungsvariante von Figur 14 bis 20 auf der Längachse der Seilzugeinstellung (1) liegen und dabei übereinander angeordnet sein. Die Betätigungskräfte werden dadurch in direkter Linie übertragen. Alternativ sind auch andere Anordnungen möglich.

Abwandlungen sind auch zur Ausführungsform von Figur 21 bis 25 möglich. Statt einer drehenden Verstellung kann das Nachstellelement (54) eine lineare Nachstellbewegung ausführen. Ferner sind andere Nachstellkinematiken mit einer Kombination von Linear- und Drehbewegung möglich. Das Spannelement (17) ist hierzu entsprechend ausgebildet. Es kann in Abwandlung der gezeigten Drehfeder aus zusammenwirkenden linearen und mehrfach vorhandenen Federn bestehen. Es kann ansonsten auch eine beliebige andere geeignete Ausbildung haben. Die Spann- oder Federkraft lässt sich an die jeweiligen Bedürfnisse und die Auslegung des Betätigungsorgans (4) anpassen. Entsprechendes gilt auch für den Nachstellweg und die Langlochführung (20) bzw. das Nachstellelement (54).

Ferner können die Merkmale der gezeigten Ausführungsbeispiele beliebig miteinander kombiniert und vertauscht werden.

### BEZUGSZEICHENLISTE

- 1: Seilzugeinstellung
- 2: Montagehilfe
- 3: Bremseinrichtung, Feststellbremse
- 4: Betätigungsorgan, Handbremshebel
- 5: Schwenkachse
- 6: Gestell
- 7: Gehäuse
- 8: Öffnung
- 9: Seilzug, Bremszug
- 10: Mantel
- 11: Seele, Seil
- 12: Ausgleichselement, Waagbalken
- 13: Abstützung für Seilzug
- 14: Mitnahmeeinrichtung, Schwenkhebel
- 15: Einstellelement, Zugbalken
- 16: Einstellelement, Schleppbalken
- 17: Spannelement
- 18: Druckfeder
- 19: Führung
- 20: Langlochführung
- 21: Langloch, Schlitz
- 22: Fixiereinrichtung, Klemmeinrichtung
- 23: Spannmittel
- 24: Klemmschraube
- 25: Schraubenkopf
- 26: Inbus, Innensechskant
- 27: Mutter
- 28: Scheibe
- 29: Rastgesperre
- 30: Rastelement, Zahnleiste
- 31: Rastelement, Zahnleiste
- 32: Lager, Auge
- 33: Lager, Haken
- 34: Ausnehmung an Zugbalken
- 35: Ausnehmung an Schleppbalken
- 36: Federanschlag, Ausnehmungsrand an Zugbalken
- 37: Federanschlag, Ausnehmungsrand an Schleppbalken
- 38: Zunge an Zugbalken
- 39: Zunge an Schleppbalken
- 40: Freiraum an Zugbalken
- 41: Freiraum an Schleppbalken
- 42: Ansatz
- 43: Ansatz
- 44: Stellposition, Montagestellung
- 45: Stellposition, Arbeitsstellung
- 46: Spannrichtung, Verstellrichtung
- 47: Zwischenteil, Ringscheibe
- 48: Anlagefläche
- 49: Finne
- 50: Leiste
- 51: Anschlag
- 52: Einstellelement, Korpus, Hebelkorpus
- 53: Führung, Seilführung am Betätigungsorgan
- 54: Einstellelement, Nachstellelement
- 55: Schwenkträger
- 56: Schwenklager
- 57: Achse, Schwenkachse
- 58: Aufnahme, Seilaufnahme
- 59: Ausklinkung
- 60: Führung, Seilführung am Nachstellelement
- 61: Feder, Drehfeder
- 62: Federende
- 63: Federende
- 64: Federaufnahme
- 65: Abstützung, Federanschlag am Betätigungsorgan
- 66: Abstützung, Federanschlag am Nachstellelement
- 67: Einstellelement, Federträger
- 68: Einstellelement, Schleppbalken
- 69: Lager, Lagerfläche
- 70: Lagerachse
- 71: Langloch, Schlitz
- 72: Bund
- 73: Halter, Federrring
- 74: Zapfen, Gewindebolzen
- 75: Schaft
- 76: Nut
- 77: Führungsmittel, Federführung
- 78: Federanschlage, Schulter
- 79: Federanschlage, Gabel
- 80: Fortsatz
- 81: Bügel
- 82: Basisteil
- 83: Auge
- 84: Ansatz
- 85: Arm, Zungenträger
- 86: Steg
- 87: Bodenplatte

- a: Abstand
- e: Einstellweg
- α: Winkel der Anlagefläche

## Patentansprüche

1. Seilzugeinstellung für ein Zugelement (9), insbesondere für eine Bremseinrichtung (3) von Fahrzeugen, wobei die Seilzugeinstellung (1) mehrere relativ zueinander geführte (19) und unter Wirkung eines Spannelements (17) relativ zueinander bewegbare und jeweils mit dem Spannelement (17) im Eingriff stehende Einstellelemente (15,16,52,54,67,68) aufweist, wobei die Seilzugeinstellung (1) eine Fixiereinrichtung (22) und ein Rastgesperre (29) mit Rastelementen (30,31) zur lösbaren Arretierung der Relativstellung der Einstellelemente (15,16,52,54,67,68) aufweist, **dadurch gekennzeichnet, dass** die Seilzugeinstellung (1) zwei direkt aneinander geführte und mit dem Spannelement (17) im Eingriff stehende Einstellelemente (15,16,52,54,67,68) aufweist, die an den einander zugekehrten Seiten jeweils ein Rastelement (30,31) aufweisen.

2. Seilzugeinstellung nach Anspruch 1, **dadurch gekennzeichnet, dass** die Rastelemente (30,31) zur Arretierung direkt miteinander oder mit einem Zwischenteil (47), insbesondere einer Ringscheibe, in Eingriff bringbar sind.

3. Seilzugeinstellung nach Anspruch 1 oder 2, **dadurch gekennzeichnet, dass** die Rastelemente (30,31) als Zahnleisten oder Noppenraster oder als aufgeraute Reibflächen oder Oberflächen oder Beläge mit einem erhöhten Reibwert ausgebildet sind.

4. Seilzugeinstellung nach Anspruch 1, 2 oder 3, **dadurch gekennzeichnet, dass** ein Zwischenteil (47) zwischen den Rastelementen (30,31), insbesondere eine Ringscheibe, verformbare ebene und/oder gewölbte Oberflächen aufweist.

5. Seilzugeinstellung nach einem der vorhergehenden Ansprüche, **dadurch gekennzeichnet, dass** die Seilzugeinstellung (1) eine gegenseitige Führung (19) für die Einstellelemente (15,16,52,54,67,68) aufweist, wobei die Führung (19) eine Langlochführung (20) mit einem oder mehreren Langlöchern (21,71) mit gerader oder gebogener Form an den Einstellelementen (15,16,52,54,67,68) aufweist.

6. Seilzugeinstellung nach einem der vorhergehenden Ansprüche, **dadurch gekennzeichnet, dass** die Fixiereinrichtung (22) ein Spannmittel (23), insbesondere eine Klemmschraube (24), aufweist, welches die Einstellelemente (15,16,52,54,67,68) über das Rastgesperre (29) zusammenspannt, wobei das Spannmittel (23) im Bereich der Führung (19) angeordnet ist und die Einstellelemente (15,16,52,54,67,68) sowie ein Langloch (21,71) durchsetzt.

7. Seilzugeinstellung nach einem der vorhergehenden Ansprüche, **dadurch gekennzeichnet, dass** die Rastelemente (30,31) an den Einstellelementen (15,16,52,54,67,68) im Bereich einer Langlochführung (20) angeordnet sind.

8. Seilzugeinstellung nach einem der vorhergehenden Ansprüche, **dadurch gekennzeichnet, dass** das eine Einstellelement (15,52,67) mit einem Betätigungsorgan (4), insbesondere einem Handbremshebel, und das andere Einstellelement (16,54,68) mit einem Zugelement (9), insbesondere einem Seilzug, verbunden ist.

9. Seilzugeinstellung nach einem der vorhergehenden Ansprüche, **dadurch gekennzeichnet, dass** die Seilzugeinstellung (1) ein von einer oder mehreren Federn (18), insbesondere Druckfedern, gebildetes Spannelement (17) und eine Federführung (77) zwischen Spannelement (17) und Einstellelementen (15,16,52,54,67,68) aufweist.

10. Seilzugeinstellung nach einem der vorhergehenden Ansprüche, **dadurch gekennzeichnet, dass** ein Einstellelement (15,16,52,54,67,68) im Kontaktbereich zum Spannmittel (23) eine schräge Anlagefläche (48) aufweist.

11. Seilzugeinstellung nach Anspruch 10, **dadurch gekennzeichnet, dass** die schräge Anlagefläche (48) zu einem zugehörigen Lager (32) des Einstellelements (15,16,52,54,67,68) hin abfällt und ein Neigungswinkel α der schrägen Anlagefläche (48) 0,5° bis 2°, vorzugsweise 1°, beträgt.

12. Seilzugeinstellung nach einem der vorhergehenden Ansprüche, **dadurch gekennzeichnet, dass** die Einstellelemente als flache, aneinander liegende Zug- und Schleppbalken (15,16) oder als Korpus (52) eines Handbremshebels (4) und als drehbar daran gelagertes Nachstellelement (54) oder als Schleppbalken (68) und als Fixierträger (67) mit Trägerbügel (81) und Spannelement (23) ausgebildet sind.

13. Seilzugeinstellung nach einem der vorhergehenden Ansprüche, **dadurch gekennzeichnet, dass** das Spannelement (17) als Feder (18), vorzugsweise als Druckfeder und als Schraubenfeder ausgebildet ist, wobei die Feder (18) Teile der Einstellelemente (15,16) gemeinsam umgreift.

14. Seilzugeinstellung nach einem der vorhergehenden Ansprüche, **dadurch gekennzeichnet, dass** die Seilzugeinstellung einen Waagbalken (12) aufweist.

15. Bremseinrichtung, insbesondere Feststellbremse, von Fahrzeugen, mit einem oder mehreren Seilzügen (9), einem Betätigungsorgan (4) und einer Seilzugeinstellung (1), die mehrere relativ zueinander bewegbare und von einem Spannelement (17) beaufschlagte Einstellelemente (15,16,52,54,67,68) aufweist, **dadurch gekennzeichnet, dass** die Seilzugeinstellung (1) nach mindestens einem der Ansprüche 1 bis 14 ausgebildet ist.

## Claims

1. Cable pull adjusting device for a pull element (9), in particular for a brake unit (3) of vehicles, wherein the cable pull adjusting device (1) has a plurality of adjustment elements (15, 16, 52, 54, 67, 68) which are guided relative to one another (19) and are moveable relative to one another under the action of a tensioning element (17) and are each in engagement with the tensioning element (17), wherein the cable pull adjusting device (1) has a fixing unit (22) and a ratchet mechanism (29) with latching elements (30, 31) for the releasable locking of the relative position of the adjustment elements (15, 16, 52, 54, 67, 68), **characterized in that** the cable pull adjusting device (1) has two adjustment elements (15, 16, 52, 54, 67, 68) which are guided directly on one another and are in engagement with the tensioning element (17) and in each case have a latching element (30, 31) on the mutually facing sides.

2. Cable pull adjusting device according to Claim 1, **characterized in that** the latching elements (30, 31) can be brought into engagement directly with each other or with an intermediate part (47), in particular an annular disc, for the locking.

3. Cable pull adjusting device according to Claim 1 or 2, **characterized in that** the latching elements (30, 31) are designed as toothed strips or pimpled grids or as roughened friction surfaces, or surfaces or coatings having an increased coefficient of friction.

4. Cable pull adjusting device according to Claim 1, 2 or 3, **characterized in that** an intermediate part (47) between the latching elements (30, 31), in particular an annular disc, has deformable, flat and/or curved surfaces.

5. Cable pull adjusting device according to one of the preceding claims, **characterized in that** the cable pull adjusting device (1) has a mutual guide (19) for the adjustment elements (15, 16, 52, 54, 67, 68), wherein the guide (19) has an elongated-hole guide (20) with one or more elongated holes (21, 71) having a rectilinear or arcuate shape on the adjustment elements (15, 16, 52, 54, 67, 68).

6. Cable pull adjusting device according to one of the preceding claims, **characterized in that** the fixing unit (22) has a clamping means (23), in particular a clamping screw (24), which clamps the adjustment elements (15, 16, 52, 54, 67, 68) together via the ratchet mechanism (29), wherein the clamping means (23) is arranged in the region of the guide (19) and passes through the adjustment elements (15, 16, 52, 54, 67, 68) and also an elongated hole (21, 71).

7. Cable pull adjusting device according to one of the preceding claims, **characterized in that** the latching elements (30, 31) are arranged on the adjustment elements (15, 16, 52, 54, 67, 68) in the region of an elongated-hole guide (20).

8. Cable pull adjusting device according to one of the preceding claims, **characterized in that** the one adjustment element (15, 52, 67) is connected to an actuating member (4), in particular to a hand brake lever, and the other adjustment element (16, 54, 68) is connected to a pull element (9), in particular a cable pull.

9. Cable pull adjusting device according to one of the preceding claims, **characterized in that** the cable pull adjusting device (1) has a tensioning element (17) formed by one or more springs (18), in particular compression springs, and has a spring guide (77) between tensioning element (17) and adjustment elements (15, 16, 52, 54, 67, 68).

10. Cable pull adjusting device according to one of the preceding claims, **characterized in that** an adjustment element (15, 16, 52, 54, 67, 68) has an oblique bearing surface (48) in the contact region with the clamping means (23).

11. Cable pull adjusting device according to Claim 10, **characterized in that** the oblique bearing surface (48) drops towards an associated bearing (32) of the adjustment element (15, 16, 52, 54, 67, 68), and an angle of inclination α of the oblique bearing surface (48) is 0.5° to 2°, preferably 1°.

12. Cable pull adjusting device according to one of the preceding claims, **characterized in that** the adjustment elements are designed as flat pull and draw bars (15, 16) bearing against each other, or as a body (52) of a hand brake lever (4) and as a readjustment element (54) mounted rotatably thereon, or as a draw bar (68) and as a fixing support (67) with a support bracket (81) and clamping element (23).

13. Cable pull adjusting device according to one of the preceding claims, **characterized in that** the tensioning element (17) is designed as a spring (18), preferably as a compression spring and as a helical spring, wherein the spring (18) engages jointly around parts of the adjustment elements (15, 16).

14. Cable pull adjusting device according to one of the preceding claims, **characterized in that** the cable pull adjusting device has a balance bar (12).

15. Brake unit, in particular parking brake, of vehicles, with one or more cable pulls (9), an actuating member (4) and a cable pull adjusting device (1) which has a plurality of adjustment elements (15, 16, 52, 54, 67, 68) which are moveable relative to one another and are acted upon by a tensioning element (17), **characterized in that** the cable pull adjusting device (1) is designed according to at least one of Claims 1 to 14.

## Revendications

1. Dispositif d'ajustage de câble de commande pour un élément de traction (9), en particulier pour un dispositif de freinage (3) de véhicules, le dispositif d'ajustage de câble de commande (1) comprenant plusieurs éléments d'ajustage (15, 16, 52, 54, 67, 68) guidés (19) les uns par rapport aux autres, déplaçables les uns par rapport aux autres sous l'effet d'un élément tendeur (17) et respectivement en prise avec l'élément tendeur (17), le dispositif d'ajustage de câble de commande (1) comprenant un dispositif de fixation (22) et un dispositif d'encliquetage (29) pourvu d'éléments d'encliquetage (30, 31) pour bloquer de manière libérable la position relative des éléments d'ajustage (15, 16, 52, 54, 67, 68), **caractérisé en ce que** le dispositif d'ajustage de câble de commande (1) comprend deux éléments d'ajustage (15, 16, 52, 54, 67, 68) guidés directement l'un contre l'autre et en prise avec l'élément tendeur (17), lesquels éléments d'ajustage comprennent respectivement un élément d'encliquetage (30, 31) sur les côtés tournés l'un vers l'autre.

2. Dispositif d'ajustage de câble de commande selon la revendication 1, **caractérisé en ce que** les éléments d'encliquetage (30, 31) peuvent, en vue du blocage, être amenés en prise directement l'un avec l'autre ou avec un une partie intermédiaire (47), en particulier avec un disque annulaire.

3. Dispositif d'ajustage de câble de commande selon la revendication 1 ou 2, **caractérisé en ce que** les éléments d'encliquetage (30, 31) sont réalisés sous forme de crémaillères ou de réseaux d'ergots ou sous forme de surfaces de frottement rendues rugueuses ou de surfaces ou de garnitures présentant un coefficient de frottement élevé.

4. Dispositif d'ajustage de câble de commande selon la revendication 1, 2 ou 3, **caractérisé en ce qu'**une partie intermédiaire (47) entre les éléments d'encliquetage (30, 31), en particulier un disque annulaire, comprend des surfaces planes et/ou courbes déformables.

5. Dispositif d'ajustage de câble de commande selon l'une quelconque des revendications précédentes, **caractérisé en ce que** le dispositif d'ajustage de câble de commande (1) comprend un guide réciproque (19) pour les éléments d'ajustage (15, 16, 52, 54, 67, 68), le guide (19) comprenant un guide en forme de trou oblong (20) présentant un ou plusieurs trous oblongs (21, 71) de forme rectiligne ou courbée sur les éléments d'ajustage (15, 16, 52, 54, 67, 68).

6. Dispositif d'ajustage de câble de commande selon l'une quelconque des revendications précédentes, **caractérisé en ce que** le dispositif de fixation (22) comprend un moyen de serrage (23), en particulier une vis de serrage (24), laquelle serre ensemble les éléments d'ajustage (15, 16, 52, 54, 67, 68) par le biais du dispositif d'encliquetage (29), le moyen de serrage (23) étant disposé dans la région du guide (19) et traversant les éléments d'ajustage (15, 16, 52, 54, 67, 68) ainsi qu'un trou oblong (21,71).

7. Dispositif d'ajustage de câble de commande selon l'une quelconque des revendications précédentes, **caractérisé en ce que** les éléments d'encliquetage (30, 31) sur les éléments d'ajustage (15, 16, 52, 54, 67, 68) sont disposés dans la région d'un guide en forme de trou oblong (20).

8. Dispositif d'ajustage de câble de commande selon l'une quelconque des revendications précédentes, **caractérisé en ce que** l'un des éléments d'ajustage (15, 52, 67) est relié à un organe d'actionnement (4), en particulier à un levier de frein à main, et l'autre élément d'ajustage (16, 54, 68) est relié à un élément de traction (9), en particulier à un câble de commande.

9. Dispositif d'ajustage de câble de commande selon l'une quelconque des revendications précédentes, **caractérisé en ce que** le dispositif d'ajustage de câble de commande (1) comprend un élément tendeur (17) formé par un ou plusieurs ressorts (18), en particulier par des ressorts de compression, et un guide de ressort (77) entre l'élément tendeur (17) et les éléments d'ajustage (15, 16, 52, 54, 67, 68).

10. Dispositif d'ajustage de câble de commande selon l'une quelconque des revendications précédentes, **caractérisé en ce qu'**un élément d'ajustage (15, 16, 52, 54, 67, 68) présente, dans la région de contact avec le moyen de serrage (23), une surface d'appui oblique (48).

11. Dispositif d'ajustage de câble de commande selon la revendication 10, **caractérisé en ce que** la surface d'appui oblique (48) est descendante en direction d'un palier (32) associé de l'élément d'ajustage (15, 16, 52, 54, 67, 68), et un angle d'inclinaison α de la surface d'appui oblique (48) vaut de 0,5° à 2°, de préférence 1°.

12. Dispositif d'ajustage de câble de commande selon l'une quelconque des revendications précédentes, **caractérisé en ce que** les éléments d'ajustage sont réalisés sous forme de barres de traction et d'entraînement (15, 16) plates situées l'une contre l'autre ou sous forme de corps (52) d'un levier de frein à main (4) et sous forme d'élément de réajustage (54) monté à rotation sur celui-ci ou sous forme de barre d'entraînement (68) et sous forme de support de fixation (67) pourvu d'un étrier de support (81) et d'un élément de serrage (23).

13. Dispositif d'ajustage de câble de commande selon l'une quelconque des revendications précédentes, **caractérisé en ce que** l'élément tendeur (17) est réalisé sous forme de ressort (18), de préférence sous forme de ressort de compression et sous forme de ressort hélicoïdal, le ressort (18) venant en prise en commun autour de parties des éléments d'ajustage (15, 16).

14. Dispositif d'ajustage de câble de commande selon l'une quelconque des revendications précédentes, **caractérisé en ce que** le dispositif d'ajustage de câble de commande comprend un fléau (12).

15. Dispositif de freinage, en particulier frein de stationnement, de véhicules, comprenant un ou plusieurs câbles de commande (9), un organe d'actionnement (4) et un dispositif d'ajustage de câble de commande (1) qui comprend plusieurs éléments d'ajustage (15, 16, 52, 54, 67, 68) déplaçables les uns par rapport aux autres et sollicités par un élément tendeur (17), **caractérisé en ce que** le dispositif d'ajustage de câble de commande (1) est réalisé selon au moins l'une des revendications 1 à 14.
